(19) Europäisches Patentamt
European Patent Office
Office européen des brevets

(11) **EP 3 839 251 B1**

(12) **EUROPÄISCHE PATENTSCHRIFT**

(45) Veröffentlichungstag und Bekanntmachung des Hinweises auf die Patenterteilung:
**03.09.2025   Patentblatt 2025/36**

(21) Anmeldenummer: **20212592.8**

(22) Anmeldetag: **08.12.2020**

(51) Internationale Patentklassifikation (IPC):
***F03D 7/04*** *(2006.01)*

(52) Gemeinsame Patentklassifikation (CPC):
**F03D 7/048; F03D 7/045;** F05B 2260/84;
F05B 2270/1033; F05B 2270/20; F05B 2270/204;
Y02E 10/72

(54) **OPTIMIERUNG EINES WINDPARKS**

WIND FARM OPTIMISATION

OPTIMISATION D'UN PARC ÉOLIEN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **20.12.2019   DE 102019135582**

(43) Veröffentlichungstag der Anmeldung:
**23.06.2021   Patentblatt 2021/25**

(73) Patentinhaber: **Wobben Properties GmbH**
**26607 Aurich (DE)**

(72) Erfinder:
• **Bott, Stefanie**
**28201 Bremen (DE)**
• **Brück, Arjun**
**28199 Bremen (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
EP-A1- 2 940 296      EP-A1- 3 376 026
EP-A1- 3 536 948      DE-A1- 102017 105 165

• **HEER FLAVIO ET AL: "Model based power optimisation of wind farms", 2014 EUROPEAN CONTROL CONFERENCE (ECC), EUCA, 24 June 2014 (2014-06-24), pages 1145 - 1150, XP032623546, ISBN: 978-3-9524269-1-3, [retrieved on 20140722], DOI: 10.1109/ ECC.2014.6862365**

**Beschreibung**

Die vorliegende Erfindung betrifft ein Verfahren zum Optimieren eines Betriebs eines Windparks. Außerdem betrifft die vorliegende Erfindung einen entsprechend optimierten Windpark.

Es ist ein genereller Wunsch, einen Windpark, in dem mehrere Windenergieanlagen aufgestellt sind und besonders über einen gemeinsamen Netzanschlusspunkt in ein elektrisches Versorgungsnetz einspeisen, so optimal wie möglich zu betreiben. Besonders geht es darum, einen möglichst hohen Ertrag zu erzielen und das bedeutet meist, dass aus jeweils vorherrschendem Wind möglichst viel Leistung erzeugt und in das elektrische Versorgungsnetz eingespeist wird. Eine Optimierung des Windparks kann aber auch beinhalten, dass der Windpark bzw. die einzelnen Windenergieanlagen mit einer möglichst geringen Belastung betrieben werden. Zumindest sollte er so betrieben werden, dass etwaige Belastungen seine geplante Laufzeit nicht verkürzen. Beispielsweise kann vorgesehen sein, so viel Leistung wie möglich zu erzeugen, ohne dabei aber die Windenergieanlagen des Windparks zu überlasten.

Ein optimaler Ertrag, insbesondere eine optimale Leistungserzeugung aus Wind, kann besonders dadurch erreicht werden, dass jede Windenergieanlage optimal ausgelegt wird, um dann jede Windenergieanlage in einer dementsprechend möglichst optimalen Betriebsweise zu betreiben.

Eine solche Optimierung der Windenergieanlage kann besonders bedeuten, dass eine angepasste Drehzahl-Leistungs-Kennlinie für die Windenergieanlage ermittelt wird. Statt einer Drehzahl-Leistungs-Kennlinie kann auch eine Drehzahl-Drehmoment-Kennlinie verwendet werden. Bei einem Betrieb mit einer Drehzahl-Leistungs-Kennlinie wird im laufenden Betrieb, wenn die Windenergieanlage im Teillastbereich betrieben wird, eine Drehzahl abhängig von der aktuellen Leistungsabgabe eingestellt. Diese Zuordnung der zu verwendenden Drehzahl zur aktuellen Abgabeleistung wird durch die Drehzahl-Leistungs-Kennlinie vorgegeben. Die Windenergieanlage wird somit in Abhängigkeit von der Windgeschwindigkeit in ihrer Drehzahl eingestellt. Dadurch kann besonders erreicht werden, dass die Windenergieanlage mit möglichst optimaler Schnelllaufzahl läuft.

Eine solche oder andere optimale Einstellung der Windenergieanlage kann vorab, also vor Inbetriebnahme oder sogar vor Aufstellung der Windenergieanlage, durch eine entsprechende Simulation erfolgen. Bei einer solchen Simulation liegt ein genaues Modell der Windenergieanlage zugrunde. Es können auch weitere Umgebungsbedingungen wie Umgebungstopologien einfließen. Insbesondere können auch Informationen zum vorherrschenden Windprofil am Aufstellungsort einfließen. Dazu kann vor Aufstellung und/oder Inbetriebnahme der Windenergieanlagen an dem Aufstellungsort bzw. in der Nähe des Aufstellungsortes ein entsprechender Messmast aufgestellt werden.

Es wurde nun aber erkannt, dass die gegenseitigen aerodynamischen Beeinflussungen der Windenergieanlagen eines Windparks untereinander so stark sein können, dass sie nicht vernachlässigbar sind. Es reicht also nicht mehr aus, eine einzelne Windenergieanlage zu betrachten und zu optimieren. Vielmehr kann je nach Windrichtung die Betriebseinstellung der einen Windenergieanlage den Ertrag einer anderen Windenergieanlage beeinflussen, besonders mitunter signifikant verschlechtern. Wird also diese eine Windenergieanlage optimiert, eine andere Windenergieanlage in ihrem Ertrag allerdings stark beeinträchtigt, so kann das mitunter dazu führen, dass die Optimierung der einen Windenergieanlage insgesamt aber zu einer Reduzierung des Ertrags des Windparks führt, weil in diesen Ertrag des Windparks der Ertrag beider betrachteten Windenergieanlagen einfließt.

Daher wäre es wünschenswert, den Windpark bzw. seinen Ertrag insgesamt zu berücksichtigen und besonders für die Betriebseinstellung jeder einzelnen Windenergieanlage die Betriebseinstellungen weiterer Windenergieanlagen, sofern sich diese Windenergieanlagen potentiell gegenseitig beeinflussen können, mitzubetrachten.

Idealisierend wären dann alle Windenergieanlagen des Windparks gemeinsam zu optimieren. Eine solche gemeinsame Optimierung ist aber aufwendig und möglicherweise liegen auch nicht ausreichend Informationen für eine solche umfassende Optimierung vor.

EP 3 536 948 A1 beschreibt, Betriebseinstellungen einer Windenergieanlage basierend auf freiströmenden Windturbulenzen zu bestimmen. Der Aufsatz von HEER FLAVIO ET AL: "Model based power optimisation of wind farms", 2014 EUROPEAN CONTROL CONFERENCE (ECC), EUCA, 24. Juni 2014, Seiten 1145-1150, XP032623546, DOI: 10.1109/ECC.2014.6862365, ISBN: 978-3-9524269-1-3 beschreibt ein Verfahren zur Optimierung der Leistung eines Windparks auf Basis eines Modells. Die europäische Patentanmeldung EP 3 376 026 A1 beschreibt ferner ein Verfahren zur Regelung einer Wirkleistung in einem Windpark. Ein Verfahren zur Bestimmung einer verfügbaren Leistung eines Windparks beschreibt das Dokument DE 10 2017 105 165 A1. Die Offenlegungsschrift EP 2 940 296 A1 beschreibt Nachlaufmodelle auf Windparkebene.

Der vorliegenden Erfindung liegt somit die Aufgabe zugrunde, zumindest eines der genannten Probleme zu adressieren. Insbesondere soll eine Lösung geschaffen werden, bei der Windenergieanlagen in ihrer Betriebseinstellung so angepasst werden, dass dies für den Windpark insgesamt optimal ist, insbesondere, dass dadurch für den Windpark maximaler Ertrag erzielt wird. Zumindest soll zu bisher bekannten Lösungen eine alternative Lösung gefunden werden.

Erfindungsgemäß wird ein Verfahren gemäß Anspruch 1 vorgeschlagen. Dieses Verfahren zum Optimieren eines Betriebs eines Windparks geht somit von einem Windpark aus, der mehrere Windenergieanlagen aufweist, wobei jede Windenergieanlage über Betriebseinstellungen einstellbar ist. Zur Optimierung des Windparks wird ein Parkmodell verwendet. Dieses Parkmodell bildet den Windpark ab, zumindest einen Teil davon. Das Windparkmodell ist somit ein Modell, das auch gegenseitige Beeinflussungen besonders aerodynamischer Art der Windenergieanlagen berücksichtigt und abbildet. Das Parkmodell, das synonym auch als Windparkmodell bezeichnet werden kann, kann durch Vermessungen des Windparks aufgenommen werden, oder durch analytische Berechnungen ausgehend von den aufgestellten oder aufzustellenden Windenergieanlagen einschließlich der Position dieser Windenergieanlagen innerhalb des Windparks oder geplanten Windparks. Topografische Gegebenheiten wie die Topologie des Geländes oder die Vegetation im Bereich des Windparks können gegebenenfalls auch mit in das Parkmodell einfließen.

Das vorgeschlagene Verfahren umfasst einen Optimierungsablauf unter Verwendung des Parkmodells und dazu werden die folgenden Schritte vorgeschlagen.

Zunächst wird in dem Parkmodell eine Optimierungswindrichtung vorgegeben, die auch als Windrichtungsverteilung vorgegeben werden kann, bei der die zu Grunde gelegte Windrichtung um die Optimierungswindrichtung schwanken kann, um den Betrieb des Windparks für diese Windrichtung zu optimieren. Entsprechend kann der Optimierungslauf für weitere Windrichtungen wiederholt werden. Die Berücksichtigung der Windrichtung ist besonders dafür relevant, um Nachlaufeffekte zu berücksichtigen, also aerodynamische Effekte einer Vorlaufwindenergieanlage auf eine in Windrichtung hinter dieser stehenden Nachlaufwindenergieanlage. Aber auch die Topografie des Geländes kann dazu führen, dass unterschiedliche Windrichtungen zu unterschiedlichen Verhalten der Windenergieanlagen führen.

In einem Variierungsschritt werden dann Betriebseinstellungen wenigstens einer ersten Vorlaufwindenergieanlage des Parkmodells variiert. Je nach Windrichtung kann eine Windenergieanlage als Vorlaufwindenergieanlage bezeichnet und untersucht werden. Das kann bei einer neuen Windrichtung auch neu definiert werden. Von dieser ersten Windenergieanlage kann besonders ein Azimutwinkel, also die Ausrichtung der Windenergieanlage und damit zusammen eine Leistungsabgabe der Windenergieanlage variiert werden. Auch die Variation der Drehzahl und/oder des Abstellwinkels der Rotorblätter kommt zusätzlich oder alternativ in Betracht. All dies erfolgt in dem Parkmodell, in dem diese Windenergieanlagen enthalten sind bzw. in dem diese Windenergieanlagen als Modell enthalten sind.

In einem Nachlaufbestimmungsschritt werden Auswirkungen des Variierens der Betriebseinstellungen auf wenigstens eine, durch die erste Vorlaufwindenergieanlage aerodynamisch beeinflusste Nachlaufwindenergieanlage mittels wenigstens eines Nachlaufmodells bestimmt. Ein solches Nachlaufmodell modelliert die Beeinflussung des Windes im Nachlauf der besagten ersten Vorlaufwindenergieanlage. Etwas anschaulich ausgedrückt modelliert oder berücksichtigt ein solches Nachlaufmodell eine Windschleppe oder durch die erste Windenergieanlage verursachte Turbulenzen, besonders, wie diese sich auf eine in Windrichtung gesehen hintere Windenergieanlage auswirken. Besonders kann angenommen werden, dass eine Windenergieanlage bei ihrer Drehung und durch ihre Rotorblätter eine spiralförmige Schleppe oder Wirbelzone hinter sich erzeugt. Dies erreicht wenigstens die eine durch die erste Windenergieanlage aerodynamisch beeinflusste Windenergieanlage und diese Auswirkungen auf die beeinflusste Windenergieanlage berücksichtigt das Nachlaufmodell.

Etwas weniger anschaulich wird besonders ein Geschwindigkeitsdefizit und eine induzierte Turbulenz betrachtet. Das Geschwindigkeitsdefizit bezeichnet die Abnahme der Windgeschwindigkeit durch die Vorlaufwindenergieanlage und die induzierte Turbulenz beschreibt Turbulenzen, die durch die Vorlaufwindenergieanlage entstehen. Induzierte Turbulenzen können synonym auch als induzierte Turbulenzintensitäten oder erhöhte Turbulenzintensitäten bezeichnet werden.

In einem Gesamtbestimmungsschritt wird dann ein Gesamtparkergebnis, insbesondere eine potentielle Gesamtparkleistung des Windparks des Parkmodells, bestimmt. Hier können auch weitere Windenergieanlagen, die in dem Parkmodell enthalten sind, berücksichtigt werden. Mit anderen Worten beinhaltet das Parkmodell sämtliche zu untersuchende Windenergieanlagen, berechnet bzw. modelliert dabei, wieviel Leistung jede dieser Windenergieanlagen bei der jeweils eingestellten Windrichtung und Windgeschwindigkeit erzeugen und das wird aufsummiert und als potentielle Gesamtparkleistung des Windparks bezeichnet. In diese Berechnung fließt ein, wie die genannte erste Vorlaufwindenergieanlage mit ihren Betriebseinstellungen aerodynamisch die wenigstens eine durch sie beeinflusste Windenergieanlage beeinflusst, nämlich insbesondere beeinträchtigt.

Es wird dabei vorgeschlagen, dass das Variieren der Betriebseinstellungen so erfolgt, dass das Gesamtparkergebnis, soweit es durch die Betriebseinstellung verändert werden kann, optimiert wird. Insbesondere erfolgt dies so, dass die Gesamtparkleistung maximiert wird. Die hierbei gefundenen Betriebseinstellungen werden als optimierte Betriebseinstellungen der jeweiligen Windenergieanlage abgespeichert. Das kann in der Windenergieanlage erfolgen, oder an einem zentralen Ort. Soweit noch mittels das Parkmodells optimiert wird, werden die Betriebseinstellungen in dem Parkmodell abgespeichert.

In einem ersten Schritt arbeitet das Verfahren also zunächst so, dass die erste Vorlaufwindenergieanlage in ihren Betriebseinstellungen variiert wird. Die sich dadurch ändernde Leistungserzeugung dieser ersten Vorlaufwindenergieanlage wird dabei ebenso berücksichtigt wie eine Auswirkung auf wenigstens eine Nachlaufwindenergieanlage. Von dieser wenigstens einen Nachlaufwindenergieanlage, die nämlich durch die erste Vorlaufwindenergieanlage beeinflusst wird, wird ebenfalls die erzeugte Leistung in dem Modell bestimmt. Das Verändern der Betriebseinstellung der ersten Vorlaufwindenergieanlage kann also beispielsweise zu einer Verringerung ihrer Leistungsabgabe führen, während es gleichzeitig zur Erhöhung der Leistungsabgabe der genannten Nachlaufwindenergieanlage führt. Auch der Einfluss auf noch weitere Windenergieanlagen im Windpark kann betrachtet werden; in einer einfachen Betrachtung kann aber zunächst zumindest veranschaulichend davon ausgegangen werden, dass nur diese beiden Windenergieanlagen von der Variation der Betriebseinstellung der ersten Windenergieanlage betroffen sind. In dem Ergebnis der Gesamtparkleistung macht sich dann also die Summe dieser beiden Leistungen bemerkbar, die nach der Optimierung höher sein sollte.

Führt also die Variation der Betriebseinstellungen der ersten Vorlaufwindenergieanlage zu einer Leistungsabnahme, die kleiner ist als die resultierende Leistungszunahme der Nachlaufwindenergieanlage, so erhöht sich das Ergebnis der Gesamtparkleistung. Wird aber die Leistung der ersten Vorlaufwindenergieanlage durch die Variation stärker verringert als die Leistung der Nachlaufwindenergieanlage erhöht wird, verringert sich auch die Gesamtparkleistung und die zugehörige Variation war nicht optimal. Die vorgeschlagene Optimierung betrifft somit besonders den Fall, dass die Variation zu einer Verringerung der Leistungsabgabe der ersten Vorlaufwindenergieanlage führt und dann kommt es darauf an, ob damit einhergehend die Leistung der weiteren durch sie beeinflussten Nachlaufwindenergieanlage so stark erhöht wird, dass die Leistungsabnahme der ersten Vorlaufwindenergieanlage kompensiert wird, oder nicht.

Auf diese Art und Weise kann dann in diesem ersten Durchlauf eine optimierte Betriebseinstellung der ersten Vorlaufwindenergieanlage gefunden werden, die als optimierte Betriebseinstellung abgespeichert werden kann.

In dem Parkmodell werden also Betriebseinstellungen der ersten Windenergieanlage in Luv vorgenommen und Auswirkungen auf die weitere Windenergieanlage in Lee über das Nachlaufmodell berücksichtigt. Wenn als Gesamtparkergebnis die Gesamtparkleistung des Windparks betrachtet wird, wird somit die Summe der Leistungen aller Windenergieanlagen im Windpark berücksichtigt. Dadurch fließen auch die Leistungen der wenigstens einen ersten Vorlaufwindenergieanlage und der wenigstens einen Nachlaufwindenergieanlage ein.

Besonders ermöglicht die Verwendung des Nachlaufmodells, den aerodynamischen Einfluss der ersten Windenergieanlage in Luv auf die weitere Windenergieanlage in Lee zu berücksichtigen. Trotzdem wird aber als Bewertungskriterium schließlich das Gesamtparkergebnis, insbesondere die Gesamtparkleistung betrachtet.

Statt der Betrachtung der Gesamtparkleistung als Gesamtparkergebnis kommt auch in Betracht, zusätzlich eine Belastung des Windparks, also besonders der einzelnen Windenergieanlagen des Windparks zu betrachten. Beispielsweise können die Belastungen über eine Gütefunktion einfließen, die sich beispielsweise auf eine zu erwartende Lebenszeitveränderung aufgrund der Belastung beziehen könnte. Die Belastung und die Parkleistung können dann über entsprechende Gewichtungen gemeinsam berücksichtigt werden.

Erfindungsgemäß wird vorgeschlagen, dass der Optimierungsablauf wiederholt wird, während die Optimierungswindrichtung beibehalten wird. Dazu werden Betriebseinstellungen wenigstens einer weiteren Vorlaufwindenergieanlage des Parkmodells variiert und Auswirkungen des Variierens der Betriebseinstellungen der wenigstens einen weiteren Vorlaufwindenergieanlage auf wenigstens eine durch die weitere Vorlaufwindenergieanlage aerodynamisch beeinflusste weitere Nachlaufwindenergieanlage, werden mittels eines weiteren Nachlaufmodells bestimmt. Insbesondere werden die Auswirkungen auf weitere, insbesondere auf alle Windenergieanlagen im Nachlauf der wenigstens einen weiteren Vorlaufwindenergieanlage bestimmt. Das Nachlaufmodell kann der Art nach das gleiche sein wie jenes, das für die erste Vorlaufwindenergieanlage und die erste Nachlaufwindenergieanlage verwendet wurde, aber mit angepassten Parametern. Die weitere Vorlaufwindenergieanlage kann eine benachbarte Windenergieanlage zur ersten Vorlaufwindenergieanlage sein. Sie kann auch die Nachlaufwindenergieanlage der ersten Vorlaufwindenergieanlage sein, also die Nachlaufwindenergieanlage des ersten Durchlaufs des Optimierungsablaufs.

Weiterhin wird dazu vorgeschlagen, dass die Betriebseinstellungen der wenigstens einen ersten Vorlaufwindenergieanlage unverändert bleiben. Insbesondere wird vorgeschlagen, dass keine der wenigstens einen ersten Vorlaufwindenergieanlage für die Optimierungswindrichtung aerodynamisch durch eine der wenigstens einen weiteren Nachlaufwindenergieanlage beeinflusst wird. Besonders wird vorgeschlagen, dass in dem ersten Durchlauf des Optimierungsablaufs eine Windenergieanlage als erste Vorlaufwindenergieanlage ausgewählt wird, die bezogen auf die vorgegebene Optimierungswindrichtung von keiner Windenergieanlage des Windparks beeinflusst wird. Für sie wird dann der erste Optimierungsablauf durchgeführt und Betriebseinstellungen für diese erste Vorlaufwindenergieanlage gefunden.

Bei der ersten Wiederholung des Optimierungsablaufs wird eine weitere Windenergieanlage ausgewählt, die somit sinngemäß in dieser Wiederholung die neue erste Vorlaufwindenergieanlage bildet. Sie kann von der ursprünglichen ersten Vorlaufwindenergieanlage gemäß erstem Optimierungsablauf, abhängen oder auch nicht. Auf diese Art und Weise wird der Optimierungsablauf wiederholt, indem, immer für dieselbe Optimierungswindrichtung, eine weitere Windenergieanlage die neue erste Vorlaufwindenergieanlage bildet. Die jeweils neue erste Vorlaufwindenergieanlage hat keinen Einfluss auf die bisherigen ersten Vorlaufwindenergieanlagen, also auf die ersten Vorlaufwindenergieanlagen der vorigen Durchläufe des Optimierungsablaufs.

Mit anderen Worten arbeitet sich das Verfahren von einer zur nächsten Optimierung des Optimierungsablaufs von den vorderen Windenergieanlagen nach und nach zu den hinteren Windenergieanlagen durch. Die Betriebseinstellungen jeder vorderen Windenergieanlage, die bereits in einem Optimierungsablauf variiert und damit im Wesentlichen optimiert wurden, bleiben bei den weiteren Wiederholungen der Optimierungsabläufe unverändert.

So können die Betriebseinstellungen der Windenergieanlagen bezogen auf die Optimierungswindrichtung von vorne nach hinten optimiert werden. Dabei kann eine Nachlaufwindenergieanlage in wenigstens einem Optimierungsablauf bei einer späteren Wiederholung des Optimierungsablaufs eine Vorlaufwindenergieanlage bilden.

Somit wird vorgeschlagen, den Optimierungsablauf mehrfach zu wiederholen, wobei immer mehr Vorlaufwindenergieanlagen, deren Betriebseinstellungen bereits variiert wurden, in ihren Betriebseinstellungen unverändert bleiben. Vorzugsweise kann ein Optimierungsablauf für nachlaufende Windenergieanlagen, die selbst keine weitere Windenergieanlage mehr beeinflussen, ausbleiben, indem diese Nachlaufwindenergieanlagen einfach gemäß ihren optimalen Betriebseinstellungen betrieben werden, die ohne Berücksichtigung des Windparks optimiert wurden. Dazu kann beispielsweise ein Betriebsparametersatz verwendet werden, der bereits beim Entwurf der Windenergieanlage berechnet wurde.

Insoweit bezeichnet eine Vorlaufwindenergieanlage allgemein eine Windenergieanlage, die eine weitere Windenergieanlage aerodynamisch beeinflusst. Diese so aerodynamisch beeinflusste Windenergieanlage wird als Nachlaufwindenergieanlage bezeichnet und sowohl die Bezeichnung einer Vorlaufwindenergieanlage als auch einer Nachlaufwindenergieanlage sind temporäre Bezeichnungen, die einer Windrichtung zugeordnet sind, nämlich besonders der Optimierungswindrichtung. Dabei sind die Begriffe der Vorlaufwindenergieanlage und der Nachlaufwindenergieanlage besonders für den Fall definiert, dass die aerodynamische Beeinflussung der Vorlaufwindenergieanlage auf die Nachlaufwindenergieanlage mittels eines Nachlaufmodells berechnet wird.

Gemäß einer Ausgestaltung wird vorgeschlagen, dass für den Optimierungsablauf eine Optimierungswindgeschwindigkeit vorgegeben wird und die optimierten Betriebseinstellungen zusammen mit der Optimierungswindrichtung und Optimierungswindgeschwindigkeit abgespeichert werden. Im Betrieb des Windparks können dann die Betriebseinstellungen in Abhängigkeit von der aktuellen Windgeschwindigkeit und Windrichtung ausgewählt werden. Dazu ist es möglich, was gemäß einer Ausführungsform vorgeschlagen wird, die jeweiligen Betriebseinstellungen zusammen mit Optimierungswindgeschwindigkeit und Optimierungswindrichtung für jede Windenergieanlage an der jeweiligen Windenergieanlage abzuspeichern. Jede Windenergieanlage hat dann also einen Datensatz mit Windgeschwindigkeiten und Windrichtungen und dem zugeordnete Betriebseinstellungen.

Optional oder zusätzlich wird vorgeschlagen, dass je Windrichtung eine Betriebskennlinie erstellt wird. Eine solche Betriebskennlinie kann eine Drehzahl-Leistungs-Kennlinie oder eine Drehzahl-Drehmoment-Kennlinie sein, um die beiden häufigsten Beispiele zu nennen. Eine solche Betriebskennlinie kann dann je Windenergieanlage und Windrichtung ausgewählt werden. Die Betriebskennlinie berücksichtigt dabei unterschiedliche Windgeschwindigkeiten, die sich nämlich in der Zuordnung zwischen Drehzahl und Leistung bzw. Drehzahl und Drehmoment widerspiegelt.

Besonders wird vorgeschlagen, dass der Optimierungsablauf für eine Optimierungswindrichtung für sämtliche Windenergieanlagen des Windparks, die dabei zu optimieren sind, durchgeführt wird, also für jede Windenergieanlage wiederholt wird. In jedem Optimierungsablauf, oder in Wiederholung des Verfahrens insgesamt, kann zusätzlich die Windgeschwindigkeit variiert werden und die jeweiligen Ergebnisse abhängig von der jeweiligen Windgeschwindigkeit, und natürlich der Optimierungswindrichtung, abgespeichert werden.

Weiterhin wird vorgeschlagen, das Verfahren insgesamt mehrfach zu wiederholen, nämlich für diverse Optimierungswindrichtungen. Beispielsweise kann die Optimierungswindrichtung in 1°-Schritten oder 5°-Schritten von 0° - 360° (bzw. von 1° oder 5° - 360°) nach und nach zugrunde gelegt werden, um jeweils das Optimierungsverfahren durchzuführen. Vorzugsweise kann das Durchprüfen all dieser Windrichtungen, jeweils als Optimierungswindrichtung, insgesamt als das Verfahren zum Optimieren verstanden bzw. bezeichnet werden.

Gemäß einer Ausgestaltung wird vorgeschlagen, dass als zu variierende Betriebseinstellungen eine, mehrere oder alle der folgenden Betriebseinstellungen verwendet werden.

Als eine Betriebseinstellung kann eine Drehzahl eines aerodynamischen Rotors der Windenergieanlage verwendet werden. Besonders beeinflusst diese Drehzahl auch die aerodynamischen Effekte auf die jeweils nachgelagerte Windenergieanlage.

Als eine Betriebseinstellung kann ein Blattwinkel wenigstens eines Rotorblatts des Rotors der betreffenden Windenergieanlage verwendet werden. Auch der Blattwinkel beeinflusst den Betrieb der Windenergieanlage und hat Einfluss auf Nachlaufeffekte der Windenergieanlage und damit Einfluss auf die Windverhältnisse an der nachgelagerten Windenergieanlage.

Als eine Betriebseinstellung kann auch die Azimutausrichtung der Gondel der Windenergieanlage verändert werden. Grundsätzlich ist zwar die Azimutausrichtung der Gondel der Windenergieanlage auf die Windrichtung einzustellen, die Gondel soll also möglichst in Windrichtung ausgerichtet sein, es kommen aber geringe Abweichungen von beispielsweise 5° bis 15° in Betracht. Solche Abweichungen von der für die einzelne Windenergieanlage optimalen Einstellung können gegebenenfalls die Turbulenzen im Nachlauf der Windenergieanlage etwas in ihrer Richtung beeinflussen, sodass dadurch gegebenenfalls erreicht werden kann, dass die Turbulenzen dieser Vorlaufwindenergieanlage die Nachlaufwindenergieanlage dann nicht mehr oder zumindest signifikant schwächer erreichen. Damit könnte eine geringe Veränderung der Azimutausrichtung der Vorlaufwindenergieanlage zu einem großen Effekt für die Nachlaufwindenergieanlage führen. Dieser Effekt betrifft auch die im Nachlauf reduzierte Windgeschwindigkeit.

Zusammen mit der Verstellung der Drehzahl, des Blattwinkels und/oder der Azimutausrichtung kann auch eine Leistungsabgabe der Windenergieanlage und damit des Generators verändert und eingestellt werden. Außerdem oder alternativ kann mit Veränderung der Drehzahl, des Blattwinkels und/oder der Azimutausrichtung das Drehmoment des Generators eingestellt und angepasst werden.

Gemäß einer Ausführungsform wird vorgeschlagen, dass Betriebseinstellungen mehrerer Vorlaufwindenergieanlagen zugleich variiert werden, wobei für jede dieser Vorlaufwindenergieanlagen Auswirkungen des Variierens der Betriebseinstellungen jeweils auf wenigstens eine, durch die jeweilige Vorlaufwindenergieanlage aerodynamisch beeinflusste Nachlaufwindenergieanlage mittels eines Nachlaufmodells berechnet werden. Die Vorlaufwindenergieanlagen bilden somit jeweils eine erste Windenergieanlage bzw. eine erste Vorlaufwindenergieanlage. Jeder Vorlaufwindenergieanlage ist zumindest eine Nachlaufwindenergieanlage zugeordnet. Somit gibt es im Grunde mehrere Windenergieanlagenpaare mit einer Vorlaufwindenergieanlage und einer Nachlaufwindenergieanlage. Für jedes dieser Paare wird ein Nachlaufmodell angewendet, um jeweils den Einfluss der Vorlaufwindenergieanlage dieses Paares auf die Nachlaufwindenergieanlage zu bestimmen. Diese Betrachtung der Windenergieanlagenpaare dient nur der Veranschaulichung, wie mehrere Vorlaufwindenergieanlagen zugleich variiert werden können. Eine Vorlaufwindenergieanlage kann aber auch mehrere Nachlaufwindenergieanlagen beeinflussen. Bei einem neuen Durchlauf und/oder einer neuen Optimierungswindrichtung erfolgt zudem eine neue Aufteilung.

Besonders liegt hier die Erkenntnis zugrunde, dass ein Windpark so viele Windenergieanlagen aufweist, dass diese in mehreren Reihen angeordnet sein können, auch wenn diese Reihen nicht unbedingt als solche bezeichnet werden. Weht der Wind beispielsweise aus West und stehen mehrere Windenergieanlagen an einem nach Westen weisenden Rand des Windparks, so können diese zugleich quasi als erste Vorlaufwindenergieanlagen berücksichtigt werden.

Bei der gleichzeitigen Variation der Betriebseinstellungen mehrerer Vorlaufwindenergieanlagen kann so vorgegangen werden, dass zunächst eine dieser Vorlaufwindenergieanlagen in ihren Betriebseinstellungen variiert wird. Auf diese Art und Weise kann beispielsweise ein Gesamtparkergebnis, insbesondere eine Gesamtparkleistung vorläufig optimiert werden. Es kann also beispielsweise bei der Variation der ersten Vorlaufwindenergieanlage ein Maximum der Gesamtparkleistung gesucht werden. Ist ein solches vorläufiges Maximum gefunden, kann die nächste dieser ersten Vorlaufwindenergieanlagen auf gleiche Art und Weise in ihren Betriebseinstellungen verändert werden, bis sich dadurch ein neues vorläufiges Maximum findet. Dieses muss dann über dem ersten vorläufigen Maximum liegen, kann gegebenenfalls genauso groß sein, wenn das Maximum vorher schon vorlag. Auf diese Art und Weise kann sukzessive mit der Variation der Betriebseinstellungen der weiteren ersten Vorlaufwindenergieanlagen verfahren werden.

Hier liegt besonders die Erkenntnis zugrunde, dass sich jeweils immer nur zwischen Windenergieanalgen eines Windenergieanlagenpaares, oder einer Windenergieanlagengruppe, eine Beeinflussung vorliegt. Diese Paare von Windenergieanlagen, die nämlich jeweils eine Vorlaufwindenergieanlage und eine Nachlaufwindenergieanlage umfassen, oder im Falle einer Windenergieanlagengruppe mehrere Vorlaufwindenergieanlagen und/oder mehrere Nachlaufwindenergieanlagen, sind im Grunde voneinander entkoppelt. Die Variation der Vorlaufwindenergieanlage eines Paares beeinflusst also nur die Nachlaufwindenergieanlage desselben Paares, nicht aber eine Nachlaufwindenergieanlage eines anderen Paares oder anderen Gruppe.

Wenn hierdurch nun für alle Vorlaufwindenergieanlagen, die in diesem ersten Optimierungsablauf variiert wurden, optimale Betriebseinstellungen gefunden wurden, kann der Optimierungsablauf mit neuen Vorlaufwindenergieanlagen wiederholt werden. Bei dieser Wiederholung können dann beispielsweise die Windenergieanlagen der aus Windrichtung gesehen zweiten Reihe variiert und in ihren Betriebseinstellungen verändert werden.

So können die Windenergieanlagen einer Reihe nach der anderen in ihren Einstellungen optimiert werden.

Bevorzugt wird das Nachlaufmodell eine induzierte Turbulenz berücksichtigen. Es wird also ein Nachlaufmodell gewählt, das eine solche induzierte Turbulenz berücksichtigen kann.

Eine solche induzierte Turbulenz ist eine sehr relevante aerodynamische Einflussgröße und es wurde erkannt, dass ihre Berücksichtigung in dem Nachlaufmodell daher zu einem entsprechend guten Ergebnis führen kann.

Besonders kann durch die Betrachtung der induzierten Turbulenz neben der Auswirkung auf die erzeugte Leistung des Windparks auch die Auswirkung und insbesondere Belastung auf die betreffenden Windenergieanlagen, insbesondere auf ihre Rotorblätter berücksichtigt werden. Die Betrachtung der induzierten Turbulenz geht insoweit über die reine Betrachtung der Leistung hinaus und liefert eine genauere Betrachtung.

Vorzugsweise berücksichtigt das Nachlaufmodell ein Geschwindigkeitsdefizit, das eine Reduzierung der Windgeschwindigkeit im Nachlauf der Windenergieanlage beschreibt bzw. definiert.

Gemäß einer Ausführungsform wird vorgeschlagen, dass als Gesamtparkergebnis eine Gesamtparkleistung unter Berücksichtigung einer maximalen mechanischen Belastung der Windenergieanlagen verwendet wird. Dadurch kann die Betrachtung der Gesamtparkleistung, die synonym auch als Parkleistung bezeichnet werden kann, für die Optimierung im Vordergrund stehen und die mechanische Belastung der Windenergieanlagen kann als Nebenbedingung betrachtet werden. Bspw. kann eine Vorlaufwindenergieanlage eine Nachlaufwindenergieanlage durch induzierte Turbulenzen stark belasten. Wird die Vorlaufwindenergieanlage in ihrer Drehzahl reduziert, kann eine Reduzierung der Leistung folgen. Erhöht sich die Leistung der Nachlaufwindenergieanlage dadurch, aber weniger stark, als die Leistung der Vorlaufwindenergieanlage reduziert wird, so wäre die Reduzierung der Drehzahl der Vorlaufwindenergieanlage unerwünscht. Wird aber zusätzlich berücksichtigt, dass die mechanische Belastung signifikant sinkt, so kann der Leistungsverlust hinnehmbar sein, insbesondere wenn der Leistungsverlust gering ist.

Erfindungsgemäß wird vorgeschlagen, dass für jeweils eine Optimierungswindrichtung die Windenergieanlagen des Windparks in einer Bearbeitungsreihenfolge sortiert werden und der Optimierungsablauf mehrfach durchlaufen wird, sodass bei jedem Durchlauf wenigstens der Variierungsschritt, der Nachlaufbestimmungsschritt und der Gesamtbestimmungsschritt durchlaufen werden. Dazu wird vorgeschlagen, dass in dem Variierungsschritt in jedem Durchlauf die Betriebseinstellungen jeweils wenigstens einer Windenergieanlage gemäß der Bearbeitungsreihenfolge variiert werden, sodass die erste Windenergieanlage, deren Betriebseinstellungen in dem ersten Durchlauf variiert werden, der ersten Windenergieanlage der Bearbeitungsreihenfolge entspricht, und weitere Windenergieanlagen, deren Betriebseinstellungen in weiteren Durchläufen variiert werden, den weiteren Windenergieanlagen der Bearbeitungsreihenfolge entsprechen. Die Bearbeitungsreihenfolge gibt somit die Reihenfolge der zu variierenden Vorlaufwindenergieanlagen wieder. Die Reihenfolge hängt von der Optimierungswindrichtung ab.

Dabei ist vorgesehen, dass die Bearbeitungsreihenfolge von Ortskoordinaten der Windenergieanlage im Windpark und der Optimierungswindrichtung abhängt.

Es wird also vorgeschlagen, je Optimierungswindrichtung die Windenergieanlagen des Windparks in eine Reihenfolge zu sortieren und gemäß dieser Reihenfolge die Optimierung durchzuführen. Grundsätzlich können hierbei aber auch entweder jeweils mehrere Windenergieanlagen, also beispielsweise eine Reihe von Windenergieanlagen, in einer gemeinsamen Position der Bearbeitungsreihenfolge vorgesehen sein, oder in der Bearbeitungsreihenfolge gekennzeichnet werden, wenn mehrere in der Bearbeitungsreihenfolge hintereinanderstehende Windenergieanlagen in demselben Optimierungsablauf als Vorlaufwindenergieanlagen betrachtet werden. Ob mehrere Windenergieanlagen in einem Durchlauf des Optimierungsablaufs in ihren Betriebseinstellungen variiert werden, bevor der Optimierungsablauf wiederholt wird, hängt auch von der Windrichtung ab, also von der dann jeweils gewählten Optimierungswindrichtung. Von der Windrichtung kann nämlich abhängen, ob tatsächlich mehrere Windenergieanlagen in einer zum Wind weisenden Reihe angeordnet sind, oder ob es für eine bestimmte Windrichtung eine solche Reihe nicht gibt.

Insbesondere hängt die Bearbeitungsreihenfolge von Ortskoordinaten der Windenergieanlage im Windpark ab und der Optimierungswindrichtung. Besonders die Position jeder Windenergieanlage in Bezug auf die übrigen oder zumindest die benachbarten Windenergieanlagen wird für das Aufstellen der Bearbeitungsreihenfolge berücksichtigt. Vorzugsweise wird eine solche Bearbeitungsreihenfolge in Abhängigkeit von der Optimierungswindrichtung abgespeichert und kann, wenn das Optimierungsverfahren zu einem späteren Zeitpunkt wiederholt werden soll, wiederverwendet werden.

Gemäß einer Ausführungsform wird vorgeschlagen, dass in dem Parkmodell jeweils für eine Vorlaufwindenergieanlage ein Azimutwinkel, ein Blattwinkel und/oder eine Rotordrehzahl an der Vorlaufwindenergieanlage als Einstellwerte eingestellt werden, eine Windgeschwindigkeit und eine Turbulenz als Anströmbedingungen vorgegeben oder ermittelt werden, in Abhängigkeit von den Einstellwerten und den Anströmbedingungen mit Hilfe einer Blattelement-Methode ein auf die Vorlaufwindenergieanlage wirkender Schubbeiwert ermittelt wird, und eine Anlagenleistung der Vorlaufwindenergieanlage bestimmt wird, und in Abhängigkeit von dem Schubbeiwert und der Turbulenz der Vorlaufwindenergieanlage eine induzierte Turbulenz und ein Geschwindigkeitsdefizit einer Nachlaufwindenergieanlage bestimmt wird. Besonders kann aus dem Geschwindigkeitsdefizit eine auf die Nachlaufanlage wirkende bzw. für sie relevante Windgeschwindigkeit bestimmt werden.

Für die Vorlaufwindenergieanlage muss somit die Anströmbedingung vorgegeben sein. Für die nächste Windenergieanlage kann folgendermaßen vorgegangen werden:
Die vorgegebenen Anströmbedingungen und Einstellwerte, besonders Azimutwinkel, Blattwinkel und Rotordrehzahl, werden als Eingangsgrößen für die Blattelement-Methode (BEM) verwendet. Diese berechnet den Schub und die Leistung an der Vorlaufwindenergieanlage. Die Anströmbedingungen an der Nachlaufwindenergieanlage werden durch die vorgegebenen Anströmbedingungen und den Schubwert der Vorlaufwindenergieanlage bestimmt. Dann erfolgt iterativ wieder das gleiche an bzw. für eine weitere Nachlaufwindenergieanlage. Mit den Anströmbedingungen an der Nachlaufwindenergieanlage und den Einstellwerten dieser Windenergieanlage wird also eine Blattelement-Methode (BEM) durchgeführt.

Die Vorlaufwindenergieanlage kann die erste Anlage in einem Optimierungslauf sein, oder auch eine spätere. Soweit die Vorlaufwindenergieanlage eine ist, die selbst durch keine Windenergieanlage beeinflusst ist, so wird als Windgeschwindigkeit die vorgegebene Optimierungswindgeschwindigkeit verwendet. Andernfalls wird eine Windgeschwindigkeit berechnet, die von der Optimierungswindgeschwindigkeit abhängt. Dabei kann die erste Windenergieanlage, die bei dem Verfahren betrachtet wird, eine sein, die sich aus einer Sortierung ergibt, die in Abhängigkeit der Windrichtung sortiert wurde, die besonders in Windrichtung sortiert wurde. Die erste Windenergieanlage, die also zuerst betrachtet wird, ist dabei insbesondere eine Vorlaufwindenergieanlage, die selbst durch keine Windenergieanlage beeinflusst wird. Das bedeutet auch, dass sich die Sortierung bei einer neuen Windrichtung ändert.

Ist die Vorlaufwindenergieanlage eine, die selbst durch keine Windenergieanlage beeinflusst ist, so wird als Tubulenz eine ambiente Turbulenz verwendet. Eine solche ambiente Turbulenz kann von der Windrichtung, also der Optimierungswindrichtung, und der Windgeschwindigkeit, also der Optimierungswindgeschwindigkeit abhängen. Diese Abhängigkeit kann durch entsprechende Vermessung des Aufstellungsortes, an dem der Windpark aufgestellt werden soll, oder an dem ein existierender Windpark verbessert werden soll, aufgenommen worden sein. Andernfalls, wenn also die Vorlaufwindenergieanlage eine ist, die durch eine Windenergieanlage beeinflusst ist, wird eine Turbulenz berechnet, die insbesondere von der ambienten Turbulenz abhängt. Die Berechnung erfolgt mit Hilfe von Nachlaufmodellen.

Die Windgeschwindigkeit und die Turbulenz bilden somit die Anströmbedingungen der betreffenden Windenergieanlage.

Üblicherweise werden Azimutwinkel, Blattwinkel und Rotordrehzahl an der Vorlaufwindenergieanlage eingestellt und als Einstellwerte bezeichnet und diese Einstellwerte werden für die weitere Simulation bzw. Berechnung verwendet. Anstelle der Rotordrehzahl könnte auch ein Drehmoment oder eine Leistung vorgegeben werden, aus der sich eine Rotordrehzahl ergeben kann.

Mit Hilfe einer Blattelementmethode wird aus den Anströmbedingungen und den Einstellwerten, also besonders allen Einstellwerten, ein Schubbeiwert und eine Anlagenleistung der betrachteten Vorlaufwindenergieanlage bestimmt. Die Anlagenleistung wird benötigt, um zusammen mit den übrigen Anlagenleistungen des Windparks die Gesamtparkleistung zu bestimmen.

Der Schubbeiwert wird benötigt, um die Windgeschwindigkeit und Turbulenz zu bestimmen, die auf eine Nachlaufwindenergieanlage wirkt. Dazu wird ein Nachlaufmodell verwendet. Ein solches Nachlaufmodell ist grds. bekannt, und es können z.B. das Modell von NO-Jensen oder das Qian-Modell verwendet werden.

Aus dem Schubbeiwert und ggf. weiteren Informationen kann auch eine Belastung der betreffenden Windenergieanlage bestimmt werden.

Entsprechend wird in Abhängigkeit von dem Schubbeiwert und der Turbulenz der Vorlaufwindenergieanlage eine induzierte Turbulenz und ein Geschwindigkeitsdefizit einer Nachlaufwindenergieanlage bestimmt wird, diese Größen wirken also auf die Nachlaufwindenergieanlage.

Die induzierte Turbulenz ist somit dann die auf die Nachlaufwindenergieanlage wirkende Turbulenz. Als Geschwindigkeitsdefizit "d" kann die Differenz zwischen der Windgeschwindigkeit der Vorlaufwindenergieanlage "v_inf" und der Windgeschwindigkeit der Nachlaufwindenergieanlage "v_wake" bezeichnet werden. Es gilt dann also folgende Gleichung: v_wake = v_inf - d (je nach Vorzeichen von "d" kann die Gleichung auch v_wake = v_inf + d lauten). Statt einer Differenz kommen auch andere Umrechnungen in Betracht. Bspw. kann das Windgeschwindigkeitsdefizit eine prozentuale Verringerung der Windgeschwindigkeit der Vorlaufwindenergieanlage angeben, so dass die Windgeschwindigkeit um diesen prozentualen Wert geringer ist, als die Windgeschwindigkeit der Vorlaufwindenergieanlage.

Vorzugsweise ist das Verfahren dadurch gekennzeichnet, dass an der Nachlaufwindenergieanlage ein Azimutwinkel, ein Blattwinkel und/oder eine Rotordrehzahl als Einstellwerte eingestellt werden, in Abhängigkeit von den Einstellwerten der Nachlaufwindenergieanlage, der induzierten Turbulenz und dem Geschwindigkeitsdefizit mit Hilfe einer Blattelement-Methode ein auf die Nachlaufwindenergieanlage wirkender Schubbeiwert ermittelt wird, und eine Anlagenleistung der Nachlaufwindenergieanlage bestimmt werden.

Der auf die Nachlaufwindenergieanlage wirkende Schubbeiwert und ihre Anlagenleistung werden somit sinngemäß wie diese Werte der Vorlaufwindenergieanlage bestimmt, wobei als Anströmbedingungen das Geschwindigkeitsdefizit bzw. eine daraus bestimmte, auf die Nachlaufwindenergieanlage wirkende Windgeschwindigkeit, und die induzierte Turbulenz verwendet werden. Der Schubbeiwert wird für die Berechnung einer induzierten Turbulenz und eines Geschwindigkeitsdefizits für eine noch weitere Nachlaufwindenergieanlage verwendet.

Gemäß einer Ausführungsform wird vorgeschlagen, dass Anströmbedingungen abhängig von weiteren Umgebungsbedingungen bestimmt werden, insbesondere Shear, Veer und/oder Luftdichte. Somit wird vorgeschlagen, diese Umgebungsbedingungen, oder eine oder einige davon, in der Simulation mit zu berücksichtigen. Diese können in einer Blattelement-Methode berücksichtigt werden. Das ist auch ein Vorteil der Blattelement-Methode, dass eine solche Berücksichtigung möglich ist. Insbesondere wird die Luftdichte in der Blattelement-Methode berücksichtigt.

Hier wurde besonders erkannt, dass die Turbulenz der Vorlaufwindenergieanlage und der Schubbeiwert von großer Relevanz für die Berechnung des Nachlaufs sind, der auf wenigstens eine Nachlaufwindenergieanlage wirkt. Der Nachlauf kann dabei vorzugsweise auch für eine zweite oder sogar dritte Nachlaufwindenergieanlage bestimmt werden, insbesondere auch dann, wenn diese zweite oder noch weitere Nachlaufwindenergieanlage jeweils selbst noch hinter der ersten Nachlaufwindenergieanlage angeordnet sind. Vorzugsweise wird bei der Berechnung des Nachlaufs eine Entfernung jeweils zu einer Nachlaufwindenergieanlage berücksichtigt.

Entsprechend kann bei einer Wiederholung des Optimierungsablaufs eine neue Vorlaufwindenergieanlage verwendet werden und davon ausgehend der Nachlauf auf wenigstens eine weitere Nachlaufwindenergieanlage bestimmt werden.

Als Nachlauf wird hier besonders die durch die Vorlaufwindenergieanlage für die wenigstens eine Nachlaufwindenergieanlage resultierende Veränderung der Windströmung bezeichnet, insbesondere das resultierende Geschwindigkeitsdefizit und die induzierte Turbulenz.

Gemäß einer weiteren Ausführungsform wird vorgeschlagen, dass in einem Gesamtdurchlauf der Optimierungsablauf für mehrere Windenergieanlagen wiederholt wird, bis für alle Vorlaufwindenergieanlagen des Windparks hierbei gefundene Betriebseinstellungen als optimierte Betriebseinstellungen abgespeichert wurden. Besonders wird die Optimierung so lange durchgeführt, bis die Betriebseinstellungen sich nicht mehr wesentlich ändern. Ein solcher Gesamtdurchlauf ist somit ein Durchlauf, bei dem der Optimierungsablauf für mehrere Windenergieanlagen wiederholt wird. Jedes Mal wird wenigstens eine Windenergieanlage als Vorlaufwindenergieanlage ausgewählt in ihren Betriebseinstellungen so optimiert, dass das gesamte Parkergebnis optimiert wird. Mit anderen Worten ist nach einem Gesamtdurchlauf die Optimierung aller Windenergieanlagen des Windparks dem Grunde nach abgeschlossen.

Es wurde aber erkannt, dass bei der Optimierung der Betriebseinstellungen einer Vorlaufwindenergieanlage, insbesondere bei der ersten Vorlaufwindenergieanlage, Betriebseinstellungen der übrigen Windenergieanlagen, zumindest einiger der übrigen Windenergieanlagen, später noch verändert werden. Die als optimiert angenommenen Betriebseinstellungen der genannten Vorlaufwindenergieanlage, also insbesondere der ersten Vorlaufwindenergieanlage, sind somit möglicherweise doch nicht optimal, weil sie nicht optimal auf die veränderten Betriebseinstellungen einiger oder aller übrigen Windenergieanlagen abgestimmt sind.

Deswegen wird vorgeschlagen, einen solchen Gesamtdurchlauf einmal oder mehrmals zu wiederholen. Dadurch können die Betriebseinstellungen noch etwas verbessert werden und das Gesamtparkergebnis somit auch noch etwas verbessert werden. Es wurde aber erkannt, dass solche Verbesserungen vergleichsweise gering sind, sodass wenige Wiederholungen des Gesamtdurchlaufs, also wenige Gesamtdurchläufe, meist ausreichen. Insbesondere wird vorgeschlagen, einen Gesamtdurchlauf jeweils für eine Optimierungswindrichtung zweimal, dreimal, viermal oder fünfmal durchzuführen.

Vorzugsweise wird vorgeschlagen, das Gesamtparkergebnis, insbesondere die Gesamtparkleistung, die am Ende eines Gesamtdurchlaufs erzielt wurde, mit dem Gesamtparkergebnis bzw. der Gesamtparkleistung des nächsten Optimierungsdurchlaufs zu vergleichen, um die Verbesserung des Gesamtparkergebnisses bzw. der Gesamtparkleistung zu bestimmen und zu bewerten. Vorzugsweise wird abhängig von der hierbei festgestellten Verbesserung des Gesamtparkergebnisses ein weiterer Gesamtdurchlauf vorgenommen und/oder abhängig von der Verbesserung des Gesamtparkergebnisses bzw. der Gesamtparkleistung von einem Gesamtdurchlauf zum nächsten Gesamtdurchlauf ein weiterer Gesamtdurchlauf durchgeführt oder nicht durchgeführt.

Erfindungsgemäß wird auch ein Windpark vorgeschlagen. Ein solcher Windpark weist mehrere Windenergieanlagen auf, die jeweils über Betriebseinstellungen einstellbar sind. Außerdem ist ein den Windpark oder einen Teil davon abbildendes Parkmodell vorhanden, über das die Betriebseinstellungen der Windenergieanlage optimiert sind. Die Windenergieanlage wurde also über dieses Parkmodell optimiert. Dazu wird vorgeschlagen, dass zum Optimieren ein Verfahren gemäß wenigstens einer vorstehend beschriebenen Ausführungsform verwendet wurde.

Somit wird ein Windpark vorgeschlagen, der über das beschriebene Verfahren optimiert ist. Das beschriebene Verfahren optimiert den Windpark in seiner Gesamtheit und berücksichtigt konkrete aerodynamische Einflüsse einer Vorlaufwindenergieanlage auf eine Nachlaufwindenergieanlage. Entsprechend spiegelt sich diese Optimierung auch in dem Gesamtverhalten des Windparks wider. Besonders ist an einem solchen Windpark zu erkennen, dass einzelne Windenergieanlagen nicht optimal arbeiten, insbesondere weniger Leistung erzeugen als sie erzeugen könnten, wohingegen das aber nur dann der Fall ist, wenn wenigstens eine nachgelagerte Windenergieanlage vorhanden ist, also eine Nachlaufwindenergieanlage, die dadurch eine höhere Leistung erzeugt, nämlich insbesondere wenigstens so viel höher wie die vorstehende Anlage, also die Vorlaufwindenergieanlage, weniger Leistung erzeugt.

Nachfolgend wird die Erfindung beispielhaft anhand von Ausführungsbeispielen unter Bezugnahme auf die begleitenden Figuren näher erläutert.

Figur 1    zeigt eine Windenergieanlage in einer perspektivischen Darstellung.

Figur 2    zeigt einen Windpark in einer schematischen Darstellung,

Figur 3    ein Ablaufdiagramm zum Berechnen eines Windparks,

Figur 4    ein Ablaufdiagramm zum Optimieren eines Windparks.

Figur 5    zeigt eine weitere schematische Darstellung eines Windparks zur Erläuterung einer Parkoptimierung.

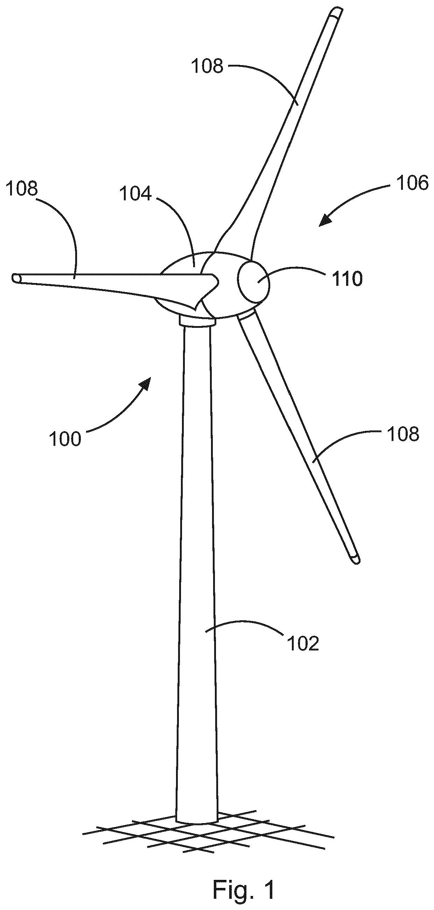

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

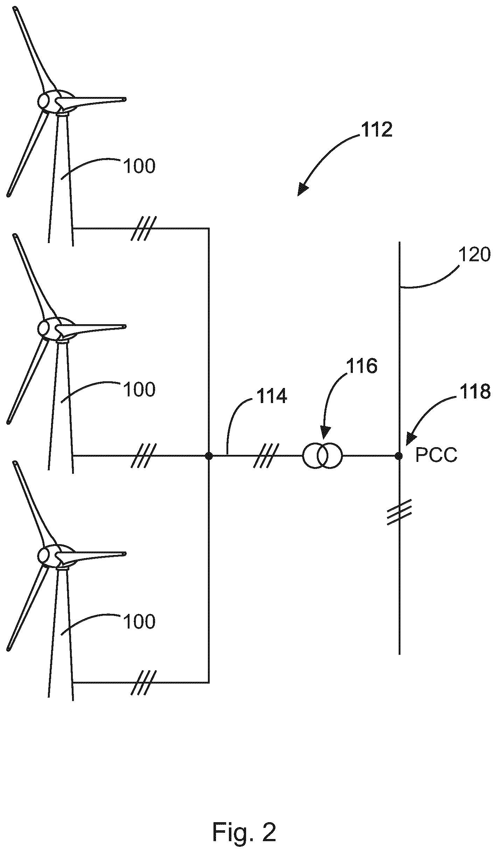

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

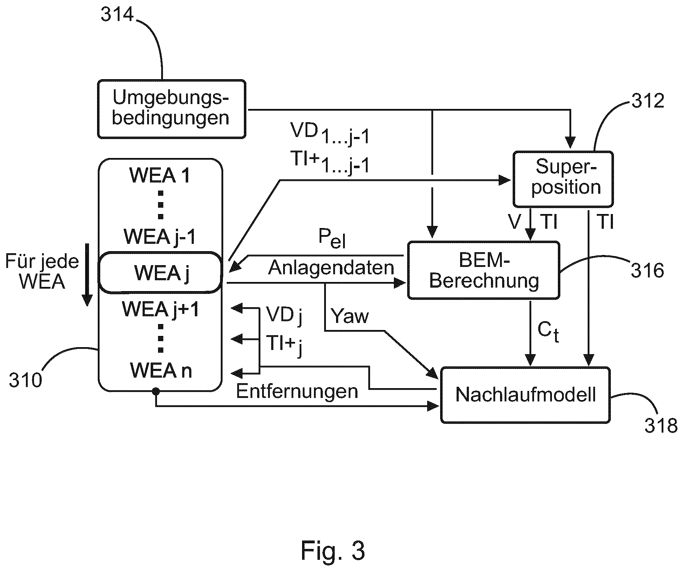

Das Diagramm der Figur 3 geht verallgemeinernd davon aus, dass 1 bis n Windenergieanlagen in einem Windpark vorhanden sind und zu berechnen wären. Eine Windenergieanlage wird dort als WEA abgekürzt und der Index reicht somit von 1 bis n. Mit dem Index j wird die aktuell zu berechnende Windenergieanlage gekennzeichnet bzw. die zugehörigen Parameter. Mit dem Index j-1 wird somit die zuvor berechnete Windenergieanlage gekennzeichnet und entsprechend mit dem Index j+1 die als nächstes zu berechnende Windenergieanlage. Die Windenergieanlagen sind dafür symbolisch in dem Parkblock 310 aufgelistet und die aktuelle Windenergieanlage als WEA j gekennzeichnet. Eine Windenergieanlage kann synonym auch als Windrad oder Windturbine bezeichnet werden.

Das Verfahren arbeitet dabei die Windenergieanlagen von der ersten Windenergieanlage WEA 1 bis zur letzten Windenergieanlage WEA n ab. Das Ergebnis ist unter anderem ein Geschwindigkeitsdefizit VD und eine induzierte Turbulenz TI, die von vorigen Windenergieanlagen WEA 1 bis WEA j-1 auf die aktuelle Windenergieanlage WEA j wirken. Für die aktuelle Windenergieanlage WEA j werden somit die Geschwindigkeitsdefizite $VD_{1...j-1}$ und die induzierten Turbulenzen $TI+_{1...j-1}$ berücksichtigt und einer Superposition in dem Superpositionsblock 312 zugeführt. Aus einem Umgebungsbedingungsblock 314 erhält der Superpositionsblock 312 entsprechend Umgebungsbedingungen. Die Windgeschwindigkeit kann auch als eine Umgebungsbedingung angesehen werden und als weitere Umgebungsbedingungen kommt ein Shear, also eine Veränderung der Windgeschwindigkeit mit dem Ort, insbesondere mit der Höhe in Betracht, sowie ein Veer, das eine Änderung der Windrichtung mit dem Ort, insbesondere mit der Höhe, bezeichnet. Auch die Luftdichte kann eine Umgebungsbedingung sein.

All dies wird in dem Superpositionsblock 312 berücksichtigt bzw. überlagert.

Die induzierte Turbulenz TI kann auch als induzierte Turbulenz TI+ bezeichnet werden. Mittels Überlagerung all dieser Informationen kann dann in dem Superpositionsblock 312 die insgesamt auf die aktuelle Windenergieanlage WEA j wirkende Windgeschwindigkeit V und auch die insgesamt auf die aktuelle Windenergieanlage WEA j wirkende induzierte Turbulenz bestimmt werden. Beide Größen bilden dann eine Eingangsgröße für einen Anlagenberechnungsblock 316. In dem Anlagenberechnungsblock 316 wird eine Blattelement-Methode zur Berechnung der Windenergieanlage durchgeführt, nämlich insbesondere zur Berechnung der erzeugbaren Leistung $P_{el}$. Dazu erhält die Blattelement-Methode, also der Anlagenberechnungsblock 316, auch die Umgebungsbedingungen von dem Umgebungsbedingungsblock 314. Außerdem fließen auch Eigenschaften der Windenergieanlage WEA j selbst ein, nämlich Daten wie Eigenschaften der Windenergieanlage als solche, wie besonders die verwendeten Rotorblätter, als auch aktuelle Betriebseinstellungen der betreffenden Windenergieanlage.

Darauf basierend berechnet dann der Anlagenberechnungsblock 316 unter Verwendung der Blattelement-Methode die elektrische Leistung $P_{el}$ der aktuellen Windenergieanlage.

Dadurch kann die aktuelle Leistung $P_{el}$, die auch als Abgabeleistung bezeichnet oder betrachtet werden kann, aus den aerodynamischen Größen unter Berücksichtigung des Windparks, nämlich der vor der aktuellen Windenergieanlage WEA j potentiell stehenden Windenergieanlagen WEA 1 bis WEA j-1 berechnet werden. Diese so berechnete Leistung $P_{el}$ kann als Information zur aktuellen Windenergieanlage WEA j zurückgegeben werden. Die betreffende Windenergieanlage WEA j kann diese Daten abspeichern und bei Bedarf abrufbar machen.

Außerdem werden die Auswirkungen dieser aktuellen Windenergieanlage WEA j auf die nachfolgenden Windenergieanlagen WEA j+1 bis WEA n berechnet. Dazu wird ein Nachlaufmodell 318 verwendet. Das Nachlaufmodell 318 erhält dafür die induzierte Turbulenz TI, die auf die aktuelle Windenergieanlage WEA j wirkt, wie sie von dem Superpositionsblock 312 berechnet wurde. Der Anlagenberechnungsblock 316 berechnet unter Verwendung der Blattelement-Methode auch einen Schubkoeffizienten $C_t$, der eine weitere Eingangsgröße für das Nachlaufmodell 318 bildet. Für das Nachlaufmodell ist außerdem die Azimutauslenkung oder -ausrichtung der Windenergieanlage von Bedeutung. Diese Azimutausrichtung kann auch als Gierwinkel oder als Yaw-Winkel bezeichnet werden. Dieser Azimutwinkel bildet somit ebenfalls eine Eingangsgröße für das Nachlaufmodell 318. Schließlich ist auch Position und Entfernung der jeweiligen nachgelagerten Windenergieanlagen WEA j+1 bis WEA n in Bezug auf die aktuelle Windenergieanlage WEA j von Bedeutung und auch das fließt als Eingangsgröße in das Nachlaufmodell ein.

Basierend auf diesen Daten werden dann das Geschwindigkeitsdefizit $VD_j$ und die induzierte Turbulenz $TI_j$ auf die nachfolgenden Windenergieanlagen WEA j+1 bis WEA n berechnet. Auf diese Art und Weise hat die aktuelle Windenergieanlage WEA j auch durch frühere Berechnungen, nämlich für die Windenergieanlage WEA 1 bis WEA j-1, die für sie relevanten Geschwindigkeitsdefizite $VD_{1...j-1}$ und induzierten Turbulenzen $TI+_{1...j-1}$ erhalten. Somit können auf diese Art und Weise alle Windenergieanlagen des Windparks durchgerechnet werden.

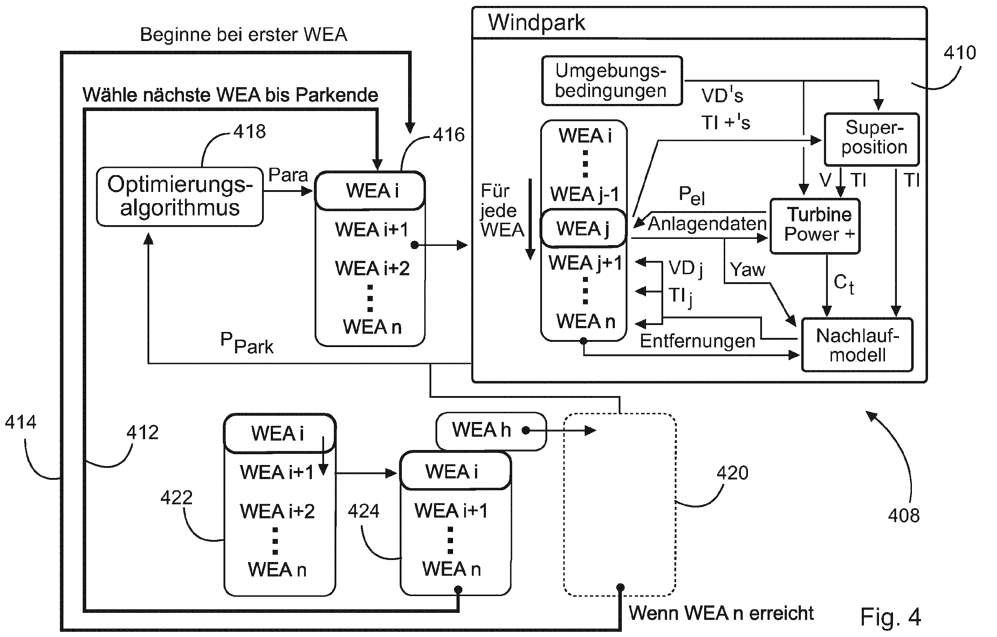

In Figur 4 ist ein Ablaufdiagramm 408 gezeigt, das eine Parkoptimierung veranschaulicht. Für die Parkoptimierung muss mehrfach eine Berechnung durchgeführt werden, wie sie im Zusammenhang zu Figur 3 erläutert wurde. Dafür ist der Berechnungsblock 410 dargestellt, der im Grunde den in Figur 3 erläuterten Ablauf beinhaltet. Entsprechend ist auch das Ablaufdiagramm der Figur 3 in dem Berechnungsblock 410 als symbolische Miniatur enthalten.

Das Ablaufdiagramm 408 veranschaulicht besonders eine innere Schleife 412 und eine äußere Schleife 414. In der inneren Schleife 412 wird ein Optimierungsablauf für mehrere Windenergieanlagen durchgeführt, nämlich eine nach der anderen. Wenn alle Windenergieanlagen in dem wiederholten Optimierungsablauf optimiert sind, ist ein Gesamtdurchlauf vollendet. Mit der äußeren Schleife 414 wird ein solcher Gesamtdurchlauf wiederholt, um das Ergebnis, das bereits in einem ersten Gesamtdurchlauf erzielt wurde, zu verbessern, oder um festzustellen, dass es nicht mehr oder nicht mehr signifikant weiter verbessert werden kann.

In der inneren Schleife 412 beginnt eine Optimierung mit der ersten Windenergieanlage, bis zur letzten Windenergieanlage n. Die dabei durchzuprüfenden Windenergieanlagen WEA 1 bis WEA n sind dabei in einer Bearbeitungsreihenfolge sortiert, die von der Windrichtung abhängt. Das soll der Abarbeitungsblock 416 veranschaulichen. Es wird grundsätzlich mit der ersten Windenergieanlage gestartet, wobei z.B. auch die letzte genommen werden könnte, und allgemein ist dann die Windenergieanlage WEA i die aktuelle Windenergieanlage, die optimiert wird. Dazu verändert ein Optimierungsalgorithmus, der durch den Optimierungsblock 418 veranschaulicht ist, die aktuell zu optimierende Windenergieanlage WEA i. Dazu werden die Parameter Rotordrehzahl, Blattwinkel und/oder Azimutausrichtung als Betriebseinstellungen eingestellt bzw. variiert, nämlich von der aktuell zu optimierenden Windenergieanlage WEA i. Mit diesen jeweils eingestellten Parametern wird dann die Berechnung des Windparks in dem Berechnungsblock 410 durchgeführt, also so durchgeführt, wie dies im Zusammenhang mit Figur 3 erläutert wurde. Das Ergebnis ist ein Gesamtparkergebnis, das hier als Parkleistung $P_{Park}$ ausgegeben wird. Abhängig von diesem Gesamtparkergebnis können die Betriebsparameter in dem Optimierungsblock 418 weiter verändert werden, bis für diese Windenergieanlage eine optimale Einstellung für die Parameter gefunden wurde und damit optimale Betriebseinstellungen für diese aktuelle Windenergieanlage WEA i gefunden wurden.

Diese können dann abgespeichert werden, was in dem Gesamtauswertungsblock 420 veranschaulicht ist.

Bei der Wiederholung der inneren Schleife 412 braucht bei der Berechnung auch in dem Berechnungsblock 410 aber nur von der Windenergieanlage i an neu berechnet zu werden. Alle stromaufwärts gelegenen Windenergieanlagen bleiben unverändert. Das ist durch die Windenergieanlage WEAh angedeutet, die entsprechend in den Gesamtauswertungsblock 420 verschoben werden kann, in dem die bereits fertig optimierten Windenergieanlagen gespeichert sind.

Ist eine Windenergieanlage in ihren Betriebseinstellungen optimiert, wird die Optimierung für die nächste Windenergieanlage durchgeführt, nämlich insbesondere für die Windenergieanlage, die in dem Abarbeitungsblock 416 als nächste vorgesehen ist.

Da jeweils nur die stromabwärts liegenden Windenergieanlagen durchgerechnet zu werden brauchen, verändert sich somit die Liste der Windenergieanlagen, die in dem Berechnungsblock 410 berechnet werden müssen. Insoweit nimmt eine dafür zugrunde zu legende Liste in jedem Iterationsschritt der inneren Schleife 412 in ihrer Anzahl ab. Das wird in der Figur 4 dadurch veranschaulicht, dass eine alte Bearbeitungsliste 422 in eine neue Bearbeitungsliste 424 geändert wird. Entsprechend ist die neue Bearbeitungsliste 424 um wenigstens eine Windenergieanlage kürzer als die alte Bearbeitungsliste 422. Es kommt aber auch in Betracht, dass, was Figur 4 nicht veranschaulicht, mehrere Windenergieanlagen zugleich optimiert werden. In dem Fall kommt auch in Betracht, dass die neue Bearbeitungsliste 424 um mehr als nur eine Windenergieanlage gegenüber der alten Bearbeitungsliste 422 reduziert wird.

Sind nun alle Windenergieanlagen des Parks durchoptimiert, was besonders dann der Fall ist, wenn die innere Schleife 412 n-mal durchlaufen wurde, ist die Optimierung in erster Näherung abgeschlossen.

Um aber zu prüfen, ob tatsächlich ein ausreichendes Optimum gefunden wurde, kann die Optimierung gemäß der inneren Schleife wiederholt werden. Das deutet die äußere Schleife 414 an. Wird der mehrfache Durchlauf der inneren Schleife 412 wiederholt, so wird beim ersten Durchlauf der inneren Schleife wieder bei der ersten Windenergieanlage begonnen und alle Windenergieanlagen werden erneut wie oben beschrieben durchgerechnet.

Das Ergebnis ist dann wieder eine Parkleistung als Gesamtparkergebnis. Diese Parkleistung des zweiten Durchlaufs der äußeren Schleife kann mit der Parkleistung als Ergebnis des ersten Durchlaufs der äußeren Schleife verglichen werden. In dieser Weise kann die äußere Schleife 414 mehrfach durchlaufen werden und jedes Mal kann die Parkleistung aufgenommen werden. Dann kann anhand der aufgenommenen Parkleistungen für jeden Durchlauf der äußeren Schleife 414 beurteilt werden, ob die Optimierung ausreichend war, oder wiederholt werden sollte. Bei einer starken Konvergenz der Parkleistung von einem zum nächsten Durchlauf der äußeren Schleife 414 kann die Berechnung abgeschlossen werden.

Das Ergebnis ist dann eine optimale Einstellung des Windparks zumindest für eine Windrichtung und eine Windgeschwindigkeit.

Die Windenergieanlage h ist dabei die Anlage, deren Einstellungen gerade erfolgreich optimiert wurden. Sie wird daher bei Seite gelegt, also nicht mehr verändert, da ihre Auswirkungen für diese Windrichtung nunmehr global konstant sind, also unverändert für alle weiteren Berechnungen des Windparks bei gleicher Optimierungswindrichtung zu Grunde gelegt wird.

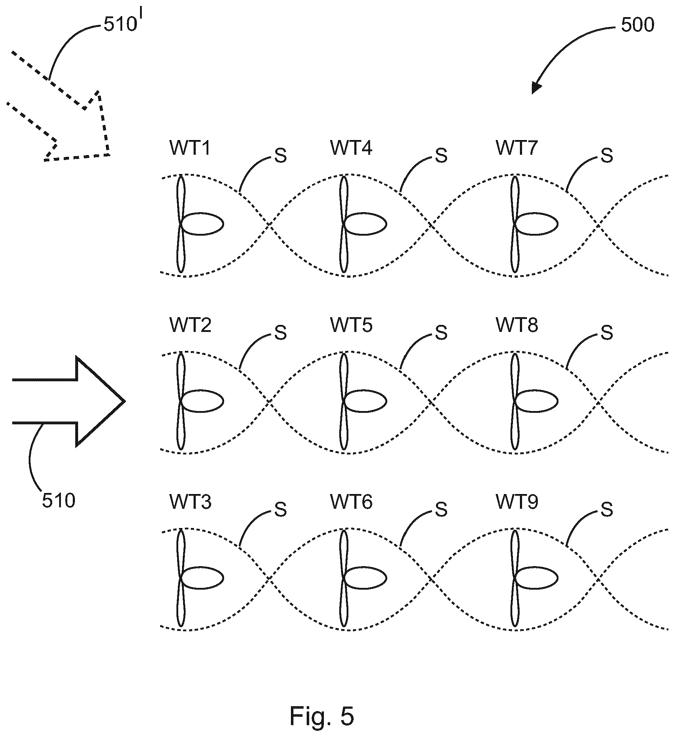

Figur 5 veranschaulicht einen Windpark 500 mit neun Windenergieanlagen WT 1 bis WT 9. Der Windpark 500 kann grundsätzlich dem Windpark 112 der Figur 2 entsprechen, der nur aus Gründen der Veranschaulichung drei Windenergieanlagen zeigt. Auch die neun Windenergieanlagen WT 1 bis WT 9 der Figur 5 sind veranschaulichend gezeigt. Gemäß Figur 5 wird eine Situation veranschaulicht, bei der im Grunde von links der Wind 510 kommt, was durch einen großen Pfeil veranschaulicht ist. Entsprechend sind alle Windenergieanlagen WT 1 bis WT 9 in ihrer Azimutstellung auf diesen Wind ausgerichtet. Jede der Windenergieanlagen WT 1 bis WT 9 ist symbolisch in einer Draufsicht mit einer Gondel und einem Rotor mit zwei in der Darstellung waagerecht stehenden Rotorblättern veranschaulicht. Tatsächlich dreht sich der Rotor mit diesen Rotorblättern natürlich und außerdem weisen moderne Windenergieanlagen heutzutage drei statt zwei Rotorblättern auf.

Ebenfalls zur Veranschaulichung ist gepunktet hinter jeder Windenergieanlage WT 1 bis WT 9 eine Windschleppe S symbolisch eingezeichnet. Eine solche Windschleppe ist etwa helixförmig ausgebildet. Tatsächlich findet sich aber im Nachlaufbereich jeder Windenergieanlage nicht nur eine klar ausgestaltete helixförmige Windschleppe, sondern generell treten dort Turbulenzen auf, nämlich induzierte Turbulenzen, die durch die jeweilige Windenergieanlage induziert wurden. Außerdem ergibt sich auch ein Geschwindigkeitsdefizit, was im Grund aussagt, dass die Windgeschwindigkeit durch die vorne stehende Windenergieanlage reduziert wird.

Bei der beispielhaften Konfiguration der Figur 5 können somit die Windturbinen WT 1 bis WT 9 in dieser durchnummerierten Reihenfolge auch optimiert werden. Dann wäre im ersten Durchlauf eines Optimierungsablaufs die Windturbine WT 1 als Vorlaufwindenergieanlage anzusehen. Alle folgenden Windenergieanlagen WT 2 bis WT 9 können als Nachlaufwindenergieanlagen für diesen ersten Optimierungsablauf angesehen werden. Besonders relevant ist der Nachlauf der ersten Windenergieanlage WT 1 aber offensichtlich nur für die vierte Windenergieanlage WT 4. Etwas Effekt dürfte sich auch noch für die siebte Windenergieanlage WT 7 ergeben.

In diesem in Figur 5 veranschaulichten Fall, bei dem tatsächlich jeweils drei Windenergieanlagen in einer Reihe hintereinanderstehen, kommt auch in Betracht, die ersten drei Windenergieanlagen WT 1, WT 2 und WT 3 im Wesentlichen gleichzeitig zu optimieren und dabei die nächsten drei Windenergieanlagen WT 4, WT 5 und WT 6 als Nachlaufwindenergieanlagen zu betrachten. Hier können besonders die Windenergieanlagen WT 1 und WT 4 als ein Windenergieanlagenpaar betrachtet werden. Gleiches gilt für die Windenergieanlagen WT 2 und WT 5 und auch für die Windenergieanlagen WT 3 und WT 6.

Somit wären in einem ersten Optimierungsablauf die Betriebseinstellungen der Windenergieanlagen WT 1, WT 2 und WT 3 eingestellt bzw. ihr Optimum gefunden. In einem zweiten Optimierungsablauf würden die Betriebseinstellungen der Windenergieanlagen WT 1, WT 2 und WT 3 unverändert bleiben, nämlich auf den Werten, die sich bei dem ersten Optimierungsablauf ergeben haben.

In diesem zweiten Durchlauf des Optimierungsablaufs können dann die Windenergieanlagen WT 4, WT 5 und WT 6 jeweils als Vorlaufwindenergieanlagen angesehen werden und die Windenergieanlagen WT 7, WT 8 und WT 9 als Nachlaufwindenergieanlagen. Bei diesem zweiten Durchgang des Optimierungsablaufs können dann die Betriebseinstellungen dieser drei Vorlaufwindenergieanlagen WT 4, WT 5 und WT 6 variiert werden, um damit ein Optimum zu finden.

Schließlich können in einem dritten Optimierungsablauf bzw. einem dritten Durchlauf des Optimierungsablaufs die Betriebseinstellungen der Windenergieanlagen WT 7, WT 8 und WT 9 verstellt bzw. eingestellt werden, während die Betriebseinstellungen der übrigen Windenergieanlagen WT 1 bis WT 6 unverändert bleiben. Eine Berücksichtigung von Nachlaufwindenergieanlagen kann in diesem letzten Durchlauf des Optimierungsablaufs entfallen.

Es kommt aber auch in Betracht, dass der Wind 510 um 30° gedreht auf den Windpark 500 strömt. Das ist als zweiter Wind 510' mit einem gestrichelten Pfeil angedeutet. In dem Fall kommt dann eine gemeinsame Betrachtung der Windenergieanlagen WT 1, WT 2 und WT 3 zugleich als erste Vorlaufwindenergieanlagen nicht mehr oder schlechter in Betracht. Dann kann vorgesehen sein, eine Windenergieanlage nach der anderen zu optimieren.

Aber auch für diesen Fall kann die Windenergieanlage WT 1 als erste Vorlaufwindenergieanlage betrachtet und in ihren Betriebseinstellungen optimiert wird. Die übrigen Windenergieanlagen können als Nachlaufwindenergieanlagen betrachtet werden. Die stärksten Auswirkungen ergeben sich möglicherweise bei der Windrichtung des zweiten Windes 510' von der Windenergieanlage WT 1 auf die Windenergieanlage WT 8. Dennoch kann die erste Windenergieanlage WT 1 als erste Vorlaufwindenergieanlage betrachtet werden und die übrigen Windenergieanlagen als Nachlaufwindenergieanlagen, wobei sich bei der Berechnung ergeben wird, dass vielleicht nur die Windenergieanlage WT 8 signifikant beeinflusst ist.

In einem zweiten Durchlauf können dann die Betriebseinstellungen der Windenergieanlage WT 1 unverändert bleiben, denn sie ist in ihren Betriebseinstellungen bereits optimiert, und als nächste Vorlaufwindenergieanlage kann die Windenergieanlage WT 2 betrachtet werden.

Auf diese Art und Weise können alle Windenergieanlagen WT 1 bis WT 9 optimiert werden, in diesem Fall nämlich in neun Durchläufen eines Optimierungsablaufs.

Im Anschluss ist dann noch möglich, diese neun Durchläufe des Optimierungsablaufs zu wiederholen, wobei die Ausgangseinstellungen aller Betriebseinstellungen der Windenergieanlagen WT 1 bis WT 9 die Einstellungen sind, die bei den ersten neun Durchläufen des Optimierungsablaufs gefunden wurden.

Eine generelle erfindungsgemäße Aufgabe war besonders, die Betriebsweise einzelner Windenergieanlagen nicht mehr wie nach aktuellem Stand, so auszulegen, dass die einzelne Anlage größtmöglichen Ertrag liefert, sondern der gesamte Windpark einen ersteigerten Ertrag liefert.

Dazu wird ein Verfahren vorgestellt, die Betriebseinstellungen wie Pitch, Drehzahl und Gierwinkel von Windrädern in Windparks im Zuge einer kooperativen Strategie zu optimieren. Bisherige bekannte Anlagensteuerungen verwenden eine kompetitive Strategie, nach der jedes Windrad Einstellungen verwendet, die für das einzelne Windrad, statt den Windpark, die größte Leistung erzielen.

Zur Ermittlung optimaler Einstellungen werden verschiedene analytische Nachlaufmodelle mit einer Berechnung mittels Blatt-Element-Methode, was auch als BEM-Berechnung bezeichnet wird, verbunden. In vergleichbaren bekannten Ansätzen kommen, statt den Betriebseinstellungen der Anlagen, lediglich Hilfsgrößen zum Einsatz wie der Induktionsfaktor, die sich nicht eindeutig einem bestimmten Betriebspunkt zuordnen lassen. Die dort erzielten Ergebnisse sind rein theoretischer Natur.

Durch den Einsatz der BEM-Berechnung können die tatsächlichen Betriebseinstellungen als Optimierungsvariablen genutzt werden. Es gelingt eine deutlich genauere Prognose der erzielten Leistung des einzelnen Windrades als auch des Parks. Zudem lässt sich die Auswirkung erhöhter Turbulenzintensität auf die Windräder prüfen.

Zur BEM-Berechnung eines Windrades müssen zunächst die Anströmbedingungen für jedes Windrad ermittelt werden. Die Anströmung kann durch einen Nachlauf beeinträchtigt sein. Das betrifft stromaufwärts stehende Windräder, die im Nachlauf eines anderen Windrads stehen. Diese Beeinträchtigung, die sich durch eine Reduzierung der Windgeschwindigkeit und einer Erhöhung der Turbulenzintensität bemerkbar macht, kann man mit analytischen Nachlaufmodellen wie dem NO-Jensen oder dem Qian-Modell bestimmen. Das hier vorgestellte bevorzugte Verfahren verwendet das Qian-Modell, welches den Vorteil bietet auch die Ablenkung des Nachlaufs durch eine absichtliche Fehleinstellung des Gierwinkels zu berücksichtigen. Die anderen Modelle kommen aber auch in Betracht. Zudem lässt sich die im Nachlauf erhöhte Turbulenzintensität bestimmen.

Bevorzugt wird vorgeschlagen, eine Superposition der Nachläufe mehrerer Windenergieanlagen zu berücksichtigen.

Steht ein Windrad 'j' im Nachlauf mehrerer stromaufwärts stehender Anlagen i, überlagern sich die Nachläufe. Das resultierende Geschwindigkeitsdefizit wird mit einer Superpositionsformel berechnet. Statt der gebräuchlichen linearen oder quadratischen Summierung der Geschwindigkeitsdefizite wird hier bevorzugt die Produktbildung der Restgeschwindigkeiten vorgeschlagen, die sich als plausibel gezeigt hat. Dazu wird die folgende Formel vorgeschlagen:

$$U_j = U_\infty \cdot \prod_{i=1}^{j-1} \left( \frac{U_{w,ij}}{U_i} \right)$$

In der Formel haben die Variablen die folgende Bedeutung:

$U_\infty$: Die ungestörte Windgeschwindigkeit

$U_i$: Die gestörte Windgeschwindigkeit am Windrad 'i'

$U_j$: Die Windgeschwindigkeit am Windrad 'j'

$U_{w,ij}$: Nachlaufgeschwindigkeit durch das Windrad i an der Stelle j, ohne Beachtung anderer Windräder

Zur Berechnung der Größen in einem Windpark wird eine Liste von Windradobjekten erstellt, also eine Liste von Windenergieanlagen des Windparks. Anhand der Koordinaten und der Windrichtung werden die Anlagen der Windstromrichtung nach sortiert. Nun kann das folgende Vorgehen über alle n Windräder mit j=1...n iteriert bzw. wiederholt werden. Das ist auch in Fig. 3 veranschaulicht.

Bezugnehmend auf die Figur 3 werden folgende Schritte vorgeschlagen:

Schritt 1: Verwenden der Geschwindigkeitsdefizite und induzierten Turbulenzen aus den Nachläufen der Windräder 1...j-1 auf das Windrad j.

Schritt 2: Ermitteln aus den induzierten Turbulenzen, Geschwindigkeitsdefiziten und Umgebungsbedingungen mit dem gewählten Superpositionsverfahren die tatsächlichen Anströmbedingungen für das betreffende Windrad, nämlich Windrad j.

Schritt 3: Durchführen einer BEM- Berechnung für das Windrad j mit den Anströmbedingungen und den Betriebseinstellungen des Windrades j, um den Schubbeiwert und die Turbinenleistung zu ermitteln.

Schritt 4: Berechnen mit dem Schubbeiwert, der induzierten Turbulenz und dem eingestellten Gierwinkel die Nachläufe der Turbine j auf die Anlagen j+1...n und speichern der Ergebnisse in den entsprechenden Windrädern.

Schritt 5: Wiederholen des Ablaufs für die nächste Anlage und alle weiteren Anlagen. Im ersten Durchgang wird somit der Einfluss des ersten Windrads auf das zweite Windrad und alle dahinterstehenden Windräder ermittelt. Im zweiten Durchgang wird der Einfluss des ersten und zweiten Windrads auf das dritte und alle weiteren, dahinterstehenden Windräder ermittelt. Im dritten Durchgang der Einfluss der ersten drei Windräder auf das vierte, und so weiter bis zum letzten Windrad ermittelt.

Es wird vorgeschlagen, dass dieses Vorgehen in Strömungsrichtung, also Windrichtung, angewandt wird, und damit ist der Park nach einem Durchgang, der die Wiederholungen für jede Windenergieanlage beinhaltet, komplett berechnet.

Der Ablauf wird in Figur 3 gezeigt.

Zur Optimierung der Betriebseinstellungen wird Folgendes vorgeschlagen.

Für jedes Windrad und Windgeschwindigkeit und Windrichtung stehen die Drehzahl, der Blatteinstell- und Gierwinkel als Optimierungsvariablen zur Verfügung. Für den gesamten Windpark ist die Zahl der Variablen damit gleich der dreifachen Anzahl an Windrädern im Park. Diese müssen zusätzlich mit der Windgeschwindigkeit und der Windrichtung variiert werden.

Die Optimierung wird sukzessive für die Windräder 1 bis n wie folgt durchgeführt, wobei jeweils das aktuelle Windrad als Windrad i bezeichnet wird. Zur schnelleren Konvergenz wird daher vorgeschlagen, in einem einzelnen Schritt nur die Einstellungen eines einzelnen Windrades 'i' in einer Reihe von Windrädern zu optimieren. Als Zielgröße, also als zu optimierende Größe, wird die gesamte Parkleistung verwendet. Die Betriebseinstellungen der stromabwärts von ‚i' gelegenen Windräder werden als konstant betrachtet. Der Windpark muss nur von dem Windrad 'i' an neu berechnet werden, alle stromaufwärts gelegenen Windräder bleiben unverändert. Ihre Ein- und Ausgangsparameter sind daher ebenfalls konstant. Das Optimierungsproblem lässt sich durch die folgende Gleichung beschreiben.

$$\max_{s_i} P_{el,Park} = P_{el,i}(U_i, TI_i, s_i) + \sum_{k=i+1}^{n} P_{el,j}(U_k, TI_k) + \sum_{h=0}^{i-1} P_{el,h} \quad \begin{array}{l} s.t. \quad TI_k \leq \\ TI_{max}, \forall\, k \geq \\ i+1, \end{array}$$

$$AoA^l(s_i) \leq AoA^l{}_{max} \;\forall\, l = 1, \ldots s.$$

In der Formel haben die Variablen die folgende Bedeutung:

h:        Laufindex über Windräder die stromaufwärts von ‚i' stehen

k:        Laufindex über alle Windräder die stromabwärts von ‚i' stehen

$s_i$:        Die Betriebseinstellungen Gier- und Blatteinstellwinkel sowie Schnelllaufzahl an Windrad 'i'

n:        Anzahl aller Windräder

$TII_k$:        induzierte Turbulenzintensität im Nachlauf des Windrads k

$U_k$:        Gestörte Windgeschwindigkeit an Windrad 'k'

$P_{el,x}$:        Die elektrische Leistung von Windrad x

$TI_{max}$:        Maximale Turbulenzintensität, siehe IEC Norm 61400-1, ed3

*s*:             Anzahl an Radiusschnitten

$A_oA^l$:          Anstellwinkel an Radiusschnitt *l*

$AoA^l_{max}$:      Maximaler Anstellwinkel an Radiusschnitt *l* (z.B. Stallwinkel).

Es ist auch denkbar, dass andere Nebenbedingungen in das Optimierungsproblem aufgenommen werden. Die Einhaltung von Lasten kann auch direkt aufgenommen werden, statt eine maximale Turbulenzintensität nicht zu überschreiten. Zusätzlich kann die Reglerstabilität mit aufgenommen werden.

Alternativ ist es auch möglich, die Betriebsparameter aller Windräder simultan zu optimieren. Dazu können die Betriebsparameter entsprechend so langsam verändert werden, dass eine Reaktion des Gesamtparkergebnisses der jeweiligen Veränderung der Betriebsparameter zugeordnet werden kann.

Bevorzugt ist aber, ein Windrad nach dem anderen in seinen Betriebseinstellungen zu optimieren. Das kann auch als Vorwärtsverfahren bezeichnet werden.

Im Vorwärtsverfahren wird das zu optimierende Windrad 'i' vom ersten zum letzten Windrad iteriert: Es erfolgt also ein Durchlauf vom ersten bis zum letzten Windrad und das jeweils aktuell optimierte Windrad wird als Windrad 'i' bezeichnet. Sind die Einstellungen des ersten Windrades optimiert, ist es von weiteren Änderungen nicht mehr betroffen, die Leistung und Nachlaufauswirkung sind bekannt. Es wird daher aus der Liste der zu berechnenden Windräder entfernt und in einer zweiten Liste abgelegt. Das zweite Windrad rückt an den ersten Listenplatz auf. Das Verfahren wird wiederholt, bis das Ende des Windparks erreicht ist. Die Berechnung des Windparks erfolgt jeweils erst ab dem zu optimierenden Windrad.

Die stromaufwärts gelegenen Windräder werden auf Basis der Einstellungen der stromabwärts gelegenen optimiert, welche sich aber später ändern können. Daher wird, nach der Optimierung des letzten Windrades, die Liste wieder aufgefüllt und erneut am ersten begonnen. Dies wiederholt sich bis die Parkleistung konvergiert, was meist nach wenigen Parkdurchgängen geschieht.

Dargestellt ist das Verfahren in Figur 4.

Es wurde erkannt, dass bisherige Ideen zur sektoriellen Abregelung eine Auswahl an Betrieben für eine einzelne Anlage vorschlagen. Bei der Erstellung dieser Betriebe werden Nachlaufeffekte nicht mitberücksichtigt. Im zweiten Schritt wird für jede Anlage und Windrichtung ein Betrieb ausgewählt, sodass beispielsweise die Parkleistung maximal ist und Lastbeschränkungen eingehalten werden. D.h. allenfalls erst nachgelagert werden Nachlaufeffekte berücksichtigt.

Im Gegensatz dazu werden in der vorgeschlagenen Idee Betriebe vorgeschlagen, die bereits im Erstellungsprozess Nachlaufeffekte berücksichtigen und so den Parkertrag steigern können.

**Patentansprüche**

1. Verfahren zum Optimieren eines Betriebs eines Windparks (112), wobei

    - der Windpark (112) mehrere Windenergieanlagen (100) aufweist,
    - jede Windenergieanlage (100) über Betriebseinstellungen einstellbar ist, und
    - ein den Windpark (112) oder eines Teils davon abbildendes Parkmodell verwendet wird,
    - und das Verfahren umfasst einen Optimierungsablauf unter Verwendung des Parkmodells mit den Schritten

        - Vorgeben einer Optimierungswindrichtung in dem Parkmodell, um den Betrieb des Windparks (112) für diese Windrichtung zu optimieren,
        - in einem Variierungsschritt variieren von Betriebseinstellungen wenigstens einer ersten Vorlaufwindenergieanlage (WT1) des Parkmodells,
        - in einem Nachlaufbestimmungsschritt Bestimmen von Auswirkungen des Variierens der Betriebseinstellungen der ersten Vorlaufwindenergieanlage (WT1) auf wenigstens eine, durch die erste Vorlaufwindenergieanlage (WT1) aerodynamisch beeinflusste Nachlaufwindenergieanlage (WT4) des Parkmodels mittels eines Nachlaufmodells (318),
        - in einem Gesamtbestimmungsschritt Bestimmen eines Gesamtparkergebnisses des Parkmodells, insbesondere einer Gesamtparkleistung des Windparks (112) des Parkmodells,

    - wobei das Variieren der Betriebseinstellungen so erfolgt, dass das Gesamtparkergebnis, soweit es durch die Betriebseinstellungen verändert werden kann, optimiert wird, insbesondere so, dass die Gesamtparkleistung maximiert wird,
    - wobei die hierbei gefundenen Betriebseinstellungen als optimierte Betriebseinstellung der jeweiligen Windenergieanlage (100) abgespeichert werden und
- der Optimierungsablauf wiederholt wird, wobei

- die Optimierungswindrichtung beibehalten wird,
- Betriebseinstellungen wenigstens einer weiteren Vorlaufwindenergieanlage (WT2) des Parkmodells variiert werden,
- Auswirkungen des Variierens der Betriebseinstellungen der wenigstens einen weiteren Vorlaufwindenergieanlage (WT2) auf wenigstens eine, durch die weitere Vorlaufwindenergieanlage (WT2) aerodynamisch beeinflusste weitere Nachlaufwindenergieanlage (WT5) mittels eines weiteren Nachlaufmodells (318) bestimmt werden und
- Betriebseinstellungen der wenigstens einen ersten Vorlaufwindenergieanlage (WT1) unverändert bleiben, wobei insbesondere keine der wenigstens einen ersten Vorlaufwindenergieanlagen (WT1, WT2) für die Optimierungswindrichtung aerodynamisch durch eine der wenigstens einen weiteren Nachlaufwindenergieanlage (WT4, WT5) beeinflusst wird, wobei

- für jeweils eine Optimierungswindrichtung

- die Windenergieanlagen des Windparks in einer Bearbeitungsreihenfolge sortiert werden,
- der Optimierungsablauf mehrfach durchlaufen wird, sodass bei jedem Durchlauf wenigstens der Variierungsschritt, der Nachlaufbestimmungsschritt und der Gesamtbestimmungsschritt durchlaufen werden, und

- in dem Variierungsschritt in jedem Durchlauf die Betriebseinstellungen jeweils wenigstens einer Windenergieanlage gemäß der Bearbeitungsreihenfolge variiert werden, sodass die erste Windenergieanlage, deren Betriebseinstellungen in dem ersten Durchlauf variiert werden, der ersten Windenergieanlage der Bearbeitungsreihenfolge entspricht, und weitere Windenergieanlagen, deren Betriebseinstellungen in weiteren Durchläufen variiert werden, den weiteren Windenergieanlagen der Bearbeitungsreihenfolge entsprechen, wobei
- die Bearbeitungsreihenfolge von Ortskoordinaten der Windenergieanlage im Windpark und der Optimierungswindrichtung abhängt.

2. Verfahren nach Anspruch 1,
**dadurch gekennzeichnet, dass**

- für den Optimierungsablauf eine Optimierungswindgeschwindigkeit vorgegeben wird und
- die optimierten Betriebseinstellungen zusammen mit der Optimierungswindrichtung und der Optimierungswindgeschwindigkeit abgespeichert werden.

3. Verfahren nach einem der vorstehenden Ansprüche,
**dadurch gekennzeichnet, dass**

- als zu variierende Betriebseinstellungen eine, mehrere oder alle Betriebseinstellungen verwendet werden, aus der Liste aufweisend:

- eine Drehzahl eines aerodynamischen Rotors (106) der Windenergieanlage (100),
- einen Blattwinkel wenigstens eines Rotorblattes (108) des Rotors (106), und
- eine Azimutausrichtung der Gondel (104) der Windenergieanlage (100).

4. Verfahren nach einem der vorstehenden Ansprüche,
**dadurch gekennzeichnet, dass**

- Betriebseinstellungen mehrerer Vorlaufwindenergieanlagen zugleich variiert werden, wobei für jede dieser Vorlaufwindenergieanlagen Auswirkungen des Variierens der Betriebseinstellungen jeweils auf wenigstens eine, durch die Vorlaufwindenergieanlage aerodynamisch beeinflusste Nachlaufwindenergieanlage mittels eines Nachlaufmodells (318) berechnet werden.

5. Verfahren nach einem der vorstehenden Ansprüche,
**dadurch gekennzeichnet, dass**

- das Nachlaufmodell (318) eine induzierte Turbulenz ermittelt und/oder dass

- das Nachlaufmodell (318) ein Geschwindigkeitsdefizit ermittelt und/oder dass
- als Gesamtparkergebnis eine Gesamtparkleistung unter Berücksichtigung einer maximalen mechanischen Belastung der Windenergieanlagen verwendet wird.

6. Verfahren nach einem der vorstehenden Ansprüche,
   **dadurch gekennzeichnet, dass** in dem Parkmodell jeweils für eine Vorlaufwindenergieanlage

   - ein Azimutwinkel, ein Blattwinkel und/oder eine Rotordrehzahl an der Vorlaufwindenergieanlage als Einstellwerte eingestellt werden,
   - eine Windgeschwindigkeit und eine Turbulenz als Anströmbedingungen vorgegeben oder ermittelt werden,
   - in Abhängigkeit von den Einstellwerten und den Anströmbedingungen mit Hilfe einer Blattelement-Methode

      - ein auf die Vorlaufwindenergieanlage wirkender Schubbeiwert ermittelt wird, und
      - eine Anlagenleistung der Vorlaufwindenergieanlage bestimmt wird, und

   - in Abhängigkeit von dem Schubbeiwert und der Turbulenz der Vorlaufwindenergieanlage eine induzierte Turbulenz und ein Geschwindigkeitsdefizit einer Nachlaufwindenergieanlage bestimmt wird.

7. Verfahren nach Anspruch 6, **dadurch gekennzeichnet, dass**

   - an der Nachlaufwindenergieanlage ein Azimutwinkel, ein Blattwinkel und/oder eine Rotordrehzahl als Einstellwerte eingestellt werden,

      - in Abhängigkeit von

         - den Einstellwerten der Nachlaufwindenergieanlage,
         - der induzierten Turbulenz und
         - dem Geschwindigkeitsdefizit.

8. Verfahren nach einem der vorstehenden Ansprüche, **dadurch gekennzeichnet, dass**

   - in einem Gesamtdurchlauf der Optimierungsablauf für mehrere Windenergieanlagen wiederholt wird, bis für alle Vorlaufwindenergieanlagen des Windparks hierbei gefundene Betriebseinstellungen als optimierte Betriebseinstellungen abgespeichert wurden, und anschließend
   - der Gesamtdurchlauf einmal oder mehrmals wiederholt wird, wobei jeweils die in dem vorigen Gesamtdurchlauf abgespeicherten Betriebseinstellungen als Anfangswerte verwendet werden.

9. Windpark (112), wobei

   - der Windpark (112) mehrere Windenergieanlagen (100) aufweist,
   - jede Windenergieanlage über Betriebseinstellungen einstellbar ist, und
   - über ein den Windpark oder einen Teil davon abbildendes Parkmodell die Betriebseinstellungen der Windenergieanlagen optimiert sind, **dadurch gekennzeichnet, dass**
   - zum Optimieren ein Verfahren gemäß einem der vorstehenden Ansprüche verwendet wurde.


**Claims**

1. A method for optimizing an operation of a wind park (112), wherein

   - the wind park (112) comprises several wind turbines (100),
   - each wind turbine (100) can be adjusted via operating settings, and
   - a park model depicting the wind park (112) or part thereof is used,
   - and the method comprises an optimization sequence using the park model, with the steps

      - specifying an optimization wind direction in the park model for optimizing the operation of the wind park (112) for this wind direction,
      - in a variation step, varying operating settings of at least a first leading wind turbine (WT1) of the park model,

- in a wake determination step, determining effects of varying the operating settings of the first leading wind turbine (WT1) on at least one downstream wind turbine (WT4) of the park model which is aerodynamically influenced by the first leading wind turbine (WT1), by means of a wake model (318),
- in a total determination step, determining a total park result of the park model, in particular a total park power of the wind park (112) of the park model,

- wherein the operating settings are varied so as to optimize the total park result, insofar as it can be changed by the operating settings, in particular such that the total park power is maximized,
- wherein the operating settings thus found are stored as the optimized operating settings of the respective wind turbine (100), and
- the optimization sequence is repeated, wherein

- the optimization wind direction is retained,
- operating settings of at least one further leading wind turbine (WT2) of the park model are varied,
- effects of varying the operating settings of the at least one further leading wind turbine (WT2) on at least one further downstream wind turbine (WT5), which is aerodynamically influenced by the further leading wind turbine (WT2), are determined by means of a further wake model (318), and
- operating settings of the at least one first leading wind turbine (WT1) remain unchanged, wherein in particular none of the at least one first leading wind turbines (WT1, WT2) for the optimization wind direction is aerodynamically influenced by one of the at least one further downstream wind turbines (WT4, WT5), wherein

- for a respective optimization wind direction

- the wind turbines of the wind park are sorted into a processing order,
- the optimization sequence is run repeatedly so that on each run-through, at least one of the variation step, the wake determination step and the total determination step are run, and

- in the variation step, in each run-through, the operating settings of a respective at least one wind turbine are varied according to the processing order, so that the first wind turbine, whose operating settings are varied in the first run-through, corresponds to the first wind turbine of the processing order, and further wind turbines, whose operating settings are varied in further run-throughs, correspond to the further wind turbines of the processing order, wherein

- the processing order depends on the site coordinates of the wind turbines in the wind park and on the optimization wind direction.

2. The method as claimed in claim 1,
   wherein

   - for the optimization sequence, an optimization wind speed is predefined, and
   - the optimized operating settings are stored together with the optimization wind direction and the optimization wind speed.

3. The method as claimed in any of the preceding claims,
   wherein

   - as the operating settings to be varied, one, several or all operating settings are used from the list comprising:

     - a rotation speed of an aerodynamic rotor (106) of the wind turbine (100),
     - a blade angle of at least one rotor blade (108) of the rotor (106), and
     - an azimuth orientation of the nacelle (104) of the wind turbine (100).

4. The method as claimed in any of the preceding claims,
   wherein

   - operating settings of several leading wind turbines are varied at the same time, wherein for each of these leading wind turbines, effects of varying the operating settings on a respective at least one downstream wind turbine, which is aerodynamically influenced by the leading wind turbine, are calculated by means of a wake model (318).

5. The method as claimed in any of the preceding claims, wherein

- the wake model (318) determines an induced turbulence, and/or
- the wake model (318) determines a speed deficit, and/or
- a total park power, taking into account a maximum mechanical load of the wind turbines, is used as a total park result.

6. The method as claimed in any of the preceding claims, wherein in the park model, for a respective to leading wind turbine

- an azimuth angle, a blade angle and/or a rotor rotation speed are set as adjustment values on the leading wind turbine,
- a wind speed and a turbulence are defined or determined as flow conditions,
- depending on the adjustment values and flow conditions, by means of a blade element method

- a coefficient of thrust acting on the leading wind turbine is determined, and
- an installation power of the leading wind turbine is determined, and

- depending on the coefficient of thrust and the turbulence of the leading wind turbine, an induced turbulence and a speed deficit of a downstream wind turbine are determined.

7. The method as claimed in claim 6, wherein

- on the downstream wind turbine, an azimuth angle, a blade angle and/or a rotor rotation speed are set as adjustment values,

- depending on

- the adjustment values of the downstream wind turbine,
- the induced turbulence, and
- the speed deficit.

8. The method as claimed in any of the preceding claims, wherein

- in a total run-through, the optimization sequence is repeated for several wind turbines until operating settings found for all leading wind turbines of the wind park are stored as optimized operating settings, and then
- the total run-through is repeated once or several times, wherein the respective operating settings stored in the preceding total run are used as starting values.

9. A wind park (112), wherein

- the wind park (112) comprises several wind turbines (100),
- each wind turbine is adjustable via operating settings, and
- the operating settings of the wind turbines are optimized via a park model depicting the wind park or part thereof, **characterized in that**
- for optimization, a method as claimed in any of the preceding claims is used.

**Revendications**

1. Procédé d'optimisation d'un fonctionnement d'un parc éolien (112), dans lequel

- le parc éolien (112) présente plusieurs éoliennes (100),
- chaque éolienne (100) est réglable via des réglages de fonctionnement, et
- un modèle de parc représentant le parc éolien (112) ou une partie de celui-ci est utilisé,

- et le procédé comprend une séquence d'optimisation utilisant le modèle de parc avec les étapes

- de prédéfinition d'une direction du vent d'optimisation dans le modèle de parc pour optimiser le fonctionnement du parc éolien (112) pour cette direction du vent,

- de modification, dans une étape de modification, de réglages de fonctionnement d'au moins une première éolienne amont (WT1) du modèle de parc,

- dans une étape de détermination de sillage, de détermination des effets de la modification des réglages de fonctionnement de la première éolienne amont (WT1) sur au moins une éolienne aval (WT4) du modèle de parc influencée aérodynamiquement par la première éolienne amont (WT1) au moyen d'un modèle de sillage (318),

- dans une étape de détermination totale, la détermination d'un résultat de parc total du modèle de parc, en particulier d'une performance de parc totale du parc éolien (112) du modèle de parc,

- dans lequel la modification des réglages de fonctionnement est effectuée de sorte que le résultat de parc total, dans la mesure où il peut être changé par les réglages de fonctionnement, est optimisé, en particulier de sorte que la performance de parc totale est maximisée,

- dans lequel les réglages de fonctionnement ainsi trouvés sont enregistrés comme réglage de fonctionnement optimisé de l'éolienne (100) respective et

- la séquence d'optimisation est répétée, dans lequel

- la direction du vent d'optimisation est maintenue,

- les réglages de fonctionnement d'au moins une autre éolienne amont (WT2) du modèle de parc sont modifiés,

- les effets de la modification des réglages de fonctionnement de l'au moins une autre éolienne amont (WT2) sur au moins une autre éolienne aval (WT5) influencée aérodynamiquement par l'autre éolienne amont (WT2) sont déterminés au moyen d'un autre modèle de sillage (318) et

- les réglages de fonctionnement de l'au moins une première éolienne amont (WT1) restent inchangés, dans lequel en particulier aucune des au moins une premières éoliennes amont (WT1, WT2) n'est influencée aérodynamiquement pour la direction du vent d'optimisation par une de l'au moins une autre éolienne aval (WT4, WT5), dans lequel

- pour respectivement une direction du vent d'optimisation

- les éoliennes du parc éolien sont triées dans un ordre de traitement,

- la séquence d'optimisation est parcourue plusieurs fois de sorte qu'à chaque cycle au moins l'étape de modification, l'étape de détermination de sillage et l'étape de détermination totale soient parcourues, et

- dans l'étape de modification, à chaque cycle, les réglages de fonctionnement de respectivement au moins une éolienne sont modifiés en fonction de l'ordre de traitement, de sorte que la première éolienne dont les réglages de fonctionnement sont modifiés dans le premier cycle correspond à la première éolienne de l'ordre de traitement, et d'autres éoliennes dont les réglages de fonctionnement sont modifiés dans d'autres cycles correspondent aux autres éoliennes de l'ordre de traitement, dans lequel

- l'ordre de traitement dépend des coordonnées de localisation de l'éolienne dans le parc éolien et de la direction du vent d'optimisation.

2. Procédé selon la revendication 1,
   **caractérisé en ce que**

- pour la séquence d'optimisation une vitesse du vent d'optimisation est prédéfinie et

- les réglages de fonctionnement optimisés sont enregistrés conjointement avec la direction du vent d'optimisation et la vitesse du vent d'optimisation.

3. Procédé selon l'une quelconque des revendications précédentes, **caractérisé en ce que**

- en tant que réglages de fonctionnement à modifier, un, plusieurs ou tous les réglages de fonctionnement sont utilisés, à partir de la liste présentant :

- une vitesse de rotation d'un rotor aérodynamique (106) de l'éolienne (100),

- un angle de pale d'au moins une pale de rotor (108) du rotor (106), et

- un alignement d'azimut de la nacelle (104) de l'éolienne (100).

4. Procédé selon l'une quelconque des revendications précédentes, **caractérisé en ce que**

- des réglages de fonctionnement de plusieurs éoliennes amont sont modifiés simultanément, dans lequel, pour chacune de ces éoliennes amont, les effets de la modification des réglages de fonctionnement sont calculés respectivement sur au moins une éolienne aval influencée aérodynamiquement par l'éolienne amont au moyen d'un modèle de sillage (318).

5. Procédé selon l'une quelconque des revendications précédentes, **caractérisé en ce que**

- le modèle de sillage (318) établit une turbulence induite et/ou que
- le modèle de sillage (318) établit un déficit de vitesse et/ou que
- une puissance de parc totale tenant compte d'une charge mécanique maximale des éoliennes est utilisée comme résultat de parc total.

6. Procédé selon l'une quelconque des revendications précédentes, **caractérisé en ce que**, dans le modèle de parc respectivement pour une éolienne amont

- un angle d'azimut, un angle de pale et/ou une vitesse de rotation de rotor sont réglés comme valeurs de réglage sur l'éolienne amont,
- une vitesse du vent et une turbulence sont prédéfinies ou établies comme conditions d'écoulement,
- en fonction des valeurs de réglage et des conditions d'écoulement à l'aide d'une méthode à élément de pale
- un coefficient de poussée agissant sur l'éolienne amont est établi, et

- une puissance d'éolienne de l'éolienne amont est déterminée, et

- en fonction du coefficient de poussée et de la turbulence de l'éolienne amont, une turbulence induite et un déficit de vitesse d'une éolienne aval sont déterminés.

7. Procédé selon la revendication 6, **caractérisé en ce que**
un angle d'azimut, un angle de pale et/ou une vitesse de rotation de rotor sont réglés comme valeurs de réglage sur l'éolienne aval,

- en fonction

- des valeurs de réglage de l'éolienne aval,
- de la turbulence induite et
- du déficit de vitesse.

8. Procédé selon l'une quelconque des revendications précédentes, **caractérisé en ce que**

- la séquence d'optimisation est répétée pour plusieurs éoliennes dans un cycle total jusqu'à ce que les réglages de fonctionnement ainsi trouvés soient enregistrés comme réglages de fonctionnement optimisés pour toutes les éoliennes amont du parc éolien, puis
- le cycle total est répété une ou plusieurs fois, dans lequel les réglages de fonctionnement enregistrés dans le cycle total précédent sont utilisés comme valeurs initiales.

9. Parc éolien (112), dans lequel

- le parc éolien (112) présente plusieurs éoliennes (100),
- chaque éolienne peut être réglée via des paramètres de fonctionnement, et
- les réglages de fonctionnement des éoliennes sont optimisés via un modèle de parc représentant le parc éolien ou une partie de celui-ci, **caractérisé en ce que**
- un procédé selon l'une quelconque des revendications précédentes a été utilisé pour l'optimisation.

Fig. 1

Fig. 2

314

Umgebungsbedingungen

$VD_{1...j-1}$
$TI+_{1...j-1}$

312

Superposition

V | TI | TI

WEA 1
⋮
WEA j-1

Für jede
WEA

WEA j

WEA j+1
⋮
WEA n

310

$P_{el}$
Anlagendaten

$VD_j$
$TI+_j$
Yaw

Entfernungen

BEM-
Berechnung

316

$C_t$

Nachlaufmodell

318

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3536948 A1
- EP 3376026 A1
- DE 102017105165 A1
- EP 2940296 A1

**In der Beschreibung aufgeführte Nicht-Patentliteratur**

- **VON HEER FLAVIO et al.** Model based power optimisation of wind farms. *2014 EUROPEAN CONTROL CONFERENCE (ECC), EUCA*, June 2014, vol. 24, 1145-1150